(19)

**Europäisches Patentamt**
**European Patent Office**
**Office européen des brevets**

(11) **EP 3 563 687 B1**

(12) **EUROPEAN PATENT SPECIFICATION**

(45) Date of publication and mention
of the grant of the patent:
**14.05.2025 Bulletin 2025/20**

(21) Application number: **19180534.0**

(22) Date of filing: **22.07.2011**

(51) International Patent Classification (IPC):
*A23C 3/037* (2006.01)    *A23C 9/12* (2006.01)
*A23C 9/142* (2006.01)    *A23C 9/15* (2006.01)
*A23C 9/156* (2006.01)

(52) Cooperative Patent Classification (CPC):
**A23C 9/1206; A23B 11/137; A23C 9/1422;**
**A23C 9/15; A23C 9/156**

(54) **LACTOSE-REDUCED MILK-RELATED PRODUCT AND A PROCESS FOR ITS MANUFACTURE**

LACTOSEREDUZIERTES MILCHPRODUKT SOWIE VERFAHREN ZU DESSEN HERSTELLUNG

PRODUIT À BASE DE LAIT À TENEUR EN LACTOSE RÉDUITE ET PROCÉDÉ DE TRAITEMENT
DU LAIT POUR SA FABRICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.07.2010 US 36713110 P**
**10.12.2010 DK PA201070540**

(43) Date of publication of application:
**06.11.2019 Bulletin 2019/45**

(62) Document number(s) of the earlier application(s) in
accordance with Art. 76 EPC:
**11745512.1 / 2 595 492**

(73) Proprietor: **Arla Foods amba**
**8260 Viby J (DK)**

(72) Inventors:
• **HOLST, Hans, Henrik**
**6920 Videbæk (DK)**
• **SUNDGREN, Anja**
**14 140 Huddinge (SE)**
• **RAUH, Valentin**
**85656 Buch am Buchrain (DE)**

(74) Representative: **Guardian**
**IP Consulting I/S**
**Diplomvej, Building 381**
**2800 Kgs. Lyngby (DK)**

(56) References cited:
WO-A1-2009/000972    CN-A- 101 317 599
NL-C2- 1 014 900    NL-C2- 1 014 900
US-A1- 2009 092 731

• HARRI KALLIOINEN ET AL: "Changes during
storage of lactose hydrolysed extended shelf life
(ESL) milk", MILCHWISSENSCHAFT, vol. 63, no.
4, 20 October 2008 (2008-10-20), pages 381 - 385,
XP055011854, Retrieved from the Internet
<URL:http://lib.tkk.fi/Diss/2008/
isbn9789512293995/article3.pdf> [retrieved on
20111111]
• OLLI TOSSAVAINEN ET AL: "Effect of lactose
hydrolysis on furosine and available lysine in
UHT skim milk", MILCHWISSENSCHAFT, vol. 63,
no. 1, 18 January 2008 (2008-01-18), pages 22 -
26, XP055011849, Retrieved from the Internet
<URL:http://lib.tkk.fi/Diss/2008/
isbn9789512293995/article5.pdf> [retrieved on
20111111]
• GUNNAR RYSSTAD ET AL: "Extended shelf life
milk- advances in technology", vol. 59, no. 2, 2
May 2006 (2006-05-02), pages 85 - 96,
XP002597576, ISSN: 1364-727X, Retrieved from
the Internet <URL:http://onlinelibrary.wiley.com/
doi/10.1111/j.1471-0307.2006.00247.x/a bstract>
[retrieved on 20100823], DOI: 10.1111/
J.1471-0307.2006.00247.X

EP 3 563 687 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

- VAN ASSELT ET AL: "Extreme high-temperature treatment of milk with respect to plasmin inactivation", INTERNATIONAL DAIRY JOURNAL, ELSEVIER APPLIED SCIENCE, BARKING, GB, vol. 18, no. 5, 8 December 2007 (2007-12-08), pages 531 - 538, XP022526380, ISSN: 0958-6946

- HUIJS G ET AL: "High speed milk. A new way of treating milk has massive potential", DAIRY INDUSTRIES INTERNATIONAL,, vol. 69, no. 11, 1 November 2004 (2004-11-01), pages 30 - 32, XP009554358, ISSN: 0308-8197

**Description**

## FIELD OF THE INVENTION

The present invention relates to lactose-reduced milk-related products, and particularly such products having a long shelf-life. Additionally, the invention relates to a method of producing such products.

## BACKGROUND

It is estimated that approx. 70-75% of the adult population of the world suffer from lactose intolerance. Lactose intolerant individuals are not able to metabolise lactose and experience symptoms such as nausea, diarrhoea, or flatulence when ingesting lactose-rich products such as milk. These symptoms often keep lactose intolerant individuals from eating or drinking lactose-containing dairy products, and consequently these individuals miss the well-recognized nutritional benefits of such products.

Several approaches for producing lactose-free or lactose-reduced dairy products have previously been reported. Normally, such approaches deal with either physical removal of lactose via membrane separation or chromatography and/or enzymatic digestion of lactose, typically into galactose and glucose.

Typically, milk-related products are heat treated in order to inactivate undesirable enzymes and destroy pathogenic and spoilage microorganisms. The heating process may additionally cause physical and chemical changes (protein denaturation, browning, etc.), which positively or negatively affects the sensory characteristics and nutritional value of the products. Milk-related products may be treated by a range of processes which differ in the severity of the heat treatment.

The three general types of heat treatment (from mild to severe) are thermization, pasteurisation and sterilization. Thermization is a mild heat treatment (typically 57-68 degrees C for 15 sec.) sufficient to destroy gram-negative psychotropic vegetative microorganisms and increase the refrigerated shelf-life. Pasteurisation (typically 72 degrees C for 15 sec.) destroys most of the vegetative pathogenic organisms (bacteria, yeasts, and moulds), which may cause food poisoning. Sterilization is the most severe heat treatment (typically 121 degrees C for 3 min.) and destroys all microorganisms (vegetative and spores) or renders them incapable of further growth.

To extend the shelf-life of milk at ambient temperature beyond several days, it must be heated to higher temperatures than during pasteurisation and post-processing contamination must be eliminated. Temperatures in excess of 100 degrees C are required, however, this causes undesirable changes in the milk: decreased pH, calcium precipitation, protein denaturation, Maillard browning, and modification of casein; these changes are important and affect the sensory characteristics, nutritional value, susceptibility to foul heat exchangers, and sediment formation.

Ultra high temperature (UHT) processing is well-known in the prior art as a continuous flow process, where the milk is heated in excess of 135 degrees C, held for approx. 4 sec., rapidly cooled, and aseptically packaged. UHT can involve using traditional heat exchangers to heat and cool the milk (indirect UHT) or direct mixing of milk and steam followed by cooling to remove the condensed steam (direct UHT). UHT milk undergoes fewer chemical reactions than sterilized milk, resulting in a product that is whiter, tastes less caramelised, has reduced whey protein denaturation, and reduced loss of heat-sensitive vitamins. Even so, the development of off-flavours, especially stale or oxidized flavour, during storage, is the most important factor limiting the acceptability of UHT milk. This off-flavour development is associated with chemical reactions and changes (e.g. Maillard reaction and browning) that occur during processing and that continue during subsequent storage.

Harri Kallioinen et al. "Changes during storage of lactose hydrolysed extended shelf life (ESL) milk", Milchwissenschaft, vol. 63, no. 4, 2008, pages 381-385, discloses a study which investigates changes in ESL-treated lactose hydrolysed milk during storage. The study concludes that proteolysis, for example caused by plasmin activity, in the ESL-treated milk was clearly measurable regardless of chilled storage.

Olli Tossavainen et al. "Effect of lactose hydrolysis on furosine and available lysine in UHT skim milk", Milchwissenschaft, vol. 63, no. 1, 2008, pages 22-26, describes a study which investigates the effect of lactose hydrolysis on furosine and available lysine in UHT-treated skim milk. The study concludes that the Maillard reaction cannot be avoided in lactose hydrolysed UHT milk, which is stored at high ambient temperature.

A solution to the above-mentioned problem is presented in WO 2009/000,972, where it is suggest to heat treat lactose-reduced milk by separating the protein from the carbohydrate and UHT-treating the protein fraction and the carbohydrate fraction separately. The UHT-treated fractions are recombined after the heat treatment to form a long shelf-life lactose-reduced milk.

## SUMMARY OF THE INVENTION

The present inventors perceived the approach of WO 2009/000,972 as a complicated way of producing long shelf-life lactose-reduced milk, and set out to discover simpler ways of producing such milk products without compromising the nutritional or organoleptic quality of the resulting milk product.

Thus, an object of the invention is to provide advantageous methods of producing lactose-reduced milk-related products, and particularly long shelf-life products. Yet an object of the present invention is to provide improved long shelf-life lactose-reduced milk-related products, in comparison to the prior art.

Another object of the present invention is to provide long shelf-life milk-related products having an improved taste and particularly a reduced cooked taste as well as methods of producing such milk-related products.

A further object of the present invention is to provide long shelf-life milk-related products which, relative to the long shelf-life milk of the prior art, are healthier for the consumers who ingest them, as well as methods of producing such improved milk-related products.

Additional objects and advantages of the invention are described below.

Thus, an aspect of the invention relates to a method of producing a packaged, lactose-reduced milk-related product, the method comprising the steps of:

a) providing a lactose-reduced milk-related feed by subjecting a milk to at least one ultrafiltration (UF) step, which leads to the formation of an UF retentate and a UF permeate, and using at least the protein of UF retentate for the formation of the milk-related feed, so that milk-related feed contains at least the protein of UF retentate,

b) subjecting a milk derivative derived from said milk-related feed to a High Temperature (HT)-treatment, wherein the milk derivative is heated to a temperature in the range of 140 - 180 degrees C, kept in that temperature range for a period of at most 200 msec. and then finally cooled,

c) packaging a lactose-reduced milk-related product derived from the HT-treated milk derivative,

which method furthermore involves a hydrolysis step where at least some of the lactose is hydrolysed into glucose and galactose and an enzyme inactivation step whereby the combined activity of plasmin and plasminogen of the treated liquid is reduced by at least 60% relative to the activity of the untreated liquid,

wherein deriving the milk derivative from the milk-related feed involves subjecting the milk-related feed to the enzyme inactivation step and where the hydrolysis step is performed after subjecting the milk-related feed to the enzyme inactivation step,
or

wherein deriving the milk derivative from the milk-related feed involves hydrolysing at least some of the lactose of the milk-related feed and where the enzyme inactivation step is performed after the hydrolysis,
or

wherein deriving the lactose-reduced milk-related product from the HT-treated milk derivative involves subjecting the HT-treated milk derivative to the enzyme inactivation step,
and
wherein deriving the lactose-reduced milk-related product from the milk derivative involves hydrolysing at least some of the lactose of the HT-treated milk derivative,
and
wherein the hydrolysis step is performed before or after subjecting the HT-treated milk derivative to the enzyme inactivation step.

As documented in the Examples, the present method provides lactose-reduced milk having a very long shelf-life, a surprisingly low furosine value and at the same time a consumer-acceptable taste. To this end it should be noted that the present method is simpler both to implement and to operate than e.g. the method described in WO 2009/000,972.

Another aspect of the invention relates to a milk-related product, and particularly a long shelf-life milk-related product, e.g. the milk-related product obtainable by the method as described herein.

The lactose-reduced milk-related product obtainable by the method has a shelf-life of at least 30 days, when kept at 25 degrees C, or at least 70 days when kept at 25 degrees C.

The present inventors have found that surprisingly it is possible to obtain a long shelf-life milk with furosine values that are even lower than reported in the prior art for comparable milk products.

In the context of the present invention, the term "lactose-reduced milk-related product" is used interchangeably with the term "milk-related product" and relates to milk-based products which contain most, and preferably all, of the protein types present in skim milk. A lactose-reduced milk-related product may additionally contain various amounts of milk fat and milk minerals, and possibly also non-dairy additives such as non-dairy flavours, sweeteners, minerals and/or vitamins. Furthermore, a lactose-reduced milk-related product comprises at most 3% (w/w) lactose.

In the context of the present invention, the phrase "Y and/or X" means "Y" or "X" or "Y and X". Along the same line of logic, the phrase "$n_1$, $n_2$, ..., $n_{i-1}$, and/or $n_i$" means "$n_1$" or "$n_2$" or ... or "$n_{i-1}$" or "$n_i$" or any combination of the components : $n_1$, $n_2$,...$n_{i-1}$, and $n_i$.

The term "long shelf-life", when used in the context of the present invention, relates to products which have shelf-lives longer than ordinary pasteurized milk. Examples of the length of the shelf-life and tests to measure the actual shelf-life of the milk-related product are described herein.

## BRIEF DESCRIPTION OF THE FIGURES

Figure 1 shows a schematic flow diagram of an embodiment not according to the invention in which the milk-related feed is subjected to a HT-treatment and subsequently packaged.

Figure 2 shows a schematic flow diagram of an embodiment not according to the invention in which at least some of the lactose of the milk-related feed is hydrolysed. After the hydrolysis the resulting product is subjected to a HT-treatment and subsequently packaged.

Figure 3 shows a schematic flow diagram of an embodiment not according to the invention in which the milk-related feed is subjected to a HT-treatment. Subsequently, at least some of the lactose of the product resulting from the HT-treatment is hydrolysed, and the product containing hydrolysed lactose is packaged.

Figure 4 shows a schematic flow diagram of an embodiment not according to the invention in which the milk-related feed is subjected to an enzyme inactivation step and subsequently to a HT-treatment. The resulting product is subsequently packaged.

Figure 5 shows a schematic flow diagram of an embodiment of the invention in which at least some of the lactose of the milk-related feed is hydrolysed and the resulting product is subjected to an enzyme inactivation step and subsequently to a HT-treatment. The HT-treated product is finally packaged.

Figure 6 shows a schematic flow diagram of an embodiment of the invention in which the milk-related feed is subjected to an enzyme inactivation step, and in which at least some of the lactose of the HT-treated product is hydrolysed. The product containing hydrolysed lactose is subsequently subjected to a HT-treatment and packaged.

Figure 7 shows a schematic flow diagram of an embodiment of the invention in which the milk-related feed is subjected to an enzyme inactivation step and subsequently to a HT-treatment. After the HT-treatment at least some of the lactose of the resulting product is hydrolysed, and the resulting product, now also containing hydrolysis products of lactose, is subsequently packaged.

Figure 8 shows a schematic flow diagram of an embodiment not according to the invention in which the milk-related feed is subjected to a HT-treatment. Subsequently the resulting product is subjected to an enzyme inactivation step and packaged.

Figure 9 shows a schematic flow diagram of an embodiment of the invention in which at least some of the lactose of the milk-related feed is hydrolysed and the resulting product is subsequently subjected to a HT-treatment. The HT-treated product is subjected to an enzyme inactivation step and packaged.

Figure 10 shows a schematic flow diagram of an embodiment of the invention in which the milk-related feed is subjected to a HT-treatment. Subsequently, the resulting product is first subjected to a step of hydrolysing at least some of the lactose of the product, then to an enzyme inactivation step, and finally packaged.

Figure 11 shows a schematic flow diagram of an embodiment of the invention in which the milk-related feed is subjected to a HT-treatment. Subsequently, the resulting product is first subjected to an enzyme inactivation step, then to a step of hydrolysing at least some of the lactose of the product, and finally the product is packaged.

Figure 12 shows a schematic flow diagram of an embodiment of the invention where the milk-related feed is prepared using a combination of ultrafiltration (1) and nanofiltration (4).

Figure 13 shows a schematic flow diagram of an embodiment of the invention where the milk-related feed is prepared using a first sequence of ultrafiltration (1) and nanofiltration (4) followed by a second sequence of ultrafiltration (1) and nanofiltration (4).

Figure 14 shows the furosine values after 7 weeks of storage of the milk-related products of Example II and furthermore contains a comparison with furosine values of prior art milk.

Figure 15 shows the furosine values after 6 weeks of storage of the milk-related products of Example III and furthermore contains a comparison with furosine values of prior art milk.

Figure 16 shows the furosine values after 1-12 weeks of storage of the milk-related products of Example V and furthermore contains a comparison with furosine values of prior art milk.

## DETAILED DESCRIPTION OF THE INVENTION

Thus an aspect of the invention relates to a method of producing a packaged, lactose-reduced milk-related product, the method comprising the steps of:

a) providing a lactose-reduced milk-related feed by subjecting a milk to at least one ultrafiltration (UF) step, which leads to the formation of an UF retentate and a UF permeate, and using at least the protein of UF retentate for the formation of the milk-related feed, so that milk-related feed contains at least the protein of UF retentate,

b) subjecting a milk derivative derived from said milk-related feed to a High Temperature (HT)-treatment, wherein the milk derivative is heated to a temperature in the range of 140 - 180 degrees C, kept in that temperature range for a period of at most 200 msec. and then finally cooled,

c) packaging a lactose-reduced milk-related product derived from the HT-treated milk derivative,

which method furthermore involves a hydrolysis step where at least some of the lactose is hydrolysed into glucose and galactose and an enzyme inactivation step whereby the combined activity of plasmin and plasminogen of the treated liquid is reduced by at least 60% relative to the activity of the untreated liquid,

wherein deriving the milk derivative from the milk-related feed involves subjecting the milk-related feed to the enzyme inactivation step and where the hydrolysis step is performed after subjecting the milk-related feed to the enzyme inactivation step,
or
wherein deriving the milk derivative from the milk-related feed involves hydrolysing at least some of the lactose of the milk-related feed and where the enzyme inactivation step is performed after the hydrolysis,
or
wherein deriving the lactose-reduced milk-related product from the HT-treated milk derivative involves subjecting the HT-treated milk derivative to the enzyme inactivation step,
and
wherein deriving the lactose-reduced milk-related product from the milk derivative involves hydrolysing at least some of the lactose of the HT-treated milk derivative,
and
wherein the hydrolysis step is performed before or after subjecting the HT-treated milk derivative to the enzyme inactivation step.

In the context of the present invention the terms "lactose-reduced milk-related feed" and "milk-related feed" are used interchangeably. A lactose-reduced milk-related feed comprises at most 3% (w/w) lactose.
The lactose-reduced milk-related feed of step a) may be produced in a number of different ways. For example, some of the lactose-reduced dairy products described in the prior art may be used. See for example the lactose-reduced dairy products of the patent documents US 2005/214409A, and WO 2009/043356.
In embodiments of the invention the milk-related feed may be prepared using a process step of removal of lactose using ultrafiltration, and removal of lactose using nanofiltration.
In the invention the provision of the milk-related feed comprises subjecting a milk to at least one ultrafiltration (UF) step, which leads to the formation of an UF retentate and a UF permeate, and using at least the protein of UF retentate for the formation of the milk-related feed so that milk-related feed contains at least the protein of UF retentate. The UF retentate typically contains a concentrate of the larger molecules of the milk, e.g. a concentrate of the proteins, and the smaller molecules in substantially the same concentration. The UF permeate contains substantially no protein but contains water and smaller molecules, such as lactose and ions, in substantially the same concentration as in the milk.

The milk used to prepare the milk-related feed is preferably bovine milk.

In some preferred embodiments of the invention the provision of the milk-related feed comprises at least one nanofiltration or reverse osmosis step, which provides a permeate comprising water, and optionally also salts of mono- or divalent ions, which permeate is added to the retentate of the at least one ultrafiltration. In even more preferred embodiments of the invention, the permeate of the above-mentioned ultrafiltration step is subjected to a nanofiltration or reverse osmosis step, and the permeate of the nanofiltration or reverse osmosis is added to the retentate of the at least one ultrafiltration.

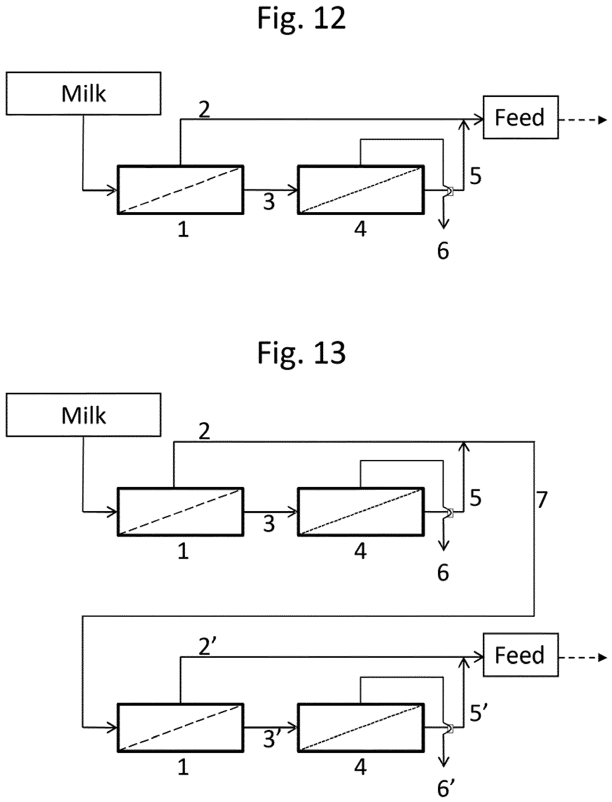

Useful examples of such processes are shown in Figs. 12 and 13.

In Fig. 12 a milk is pumped to an ultrafiltration unit (1) and separated into an ultrafiltration retentate (2) and an ultrafiltration permeate (3). The ultrafiltration permeate (3) is pumped to a nanofiltration unit (4) and separated into a nanofiltration retentate (6) and a nanofiltration permeate (5). The nanofiltration permeate, which primarily comprises water and salts of mono- or divalent ions, is mixed with the ultrafiltration permeate (3) and the mixture is used as milk-related feed. More details on how to implement such a process can be found in WO 2009/043356.

In Fig. 13 a modification of the process of Fig. 12 is shown. Instead of using the mixture (7) of the ultrafiltration retentate (2) and the nanofiltration permeate (5) directly as milk-related feed, it is sent through a second combination of ultrafiltration (1) and nanofiltration (4). The second ultrafiltration retentate (2') is combined with the second nanofiltration (5') and this mixture is used as milk-related feed.

In some preferred embodiments of the invention the provision of the milk-related feed of step a) involves the steps of

a1) subjecting a milk to ultrafiltration (UF), thereby obtaining a UF retentate and a UF permeate,
a2) subjecting the UF permeate to nanofiltration (NF), thereby obtaining an NF retentate and an NF permeate,
a3) mixing the NF permeate and the UF retentate, thereby obtaining lactose-reduced milk mixture,
a4) optionally, repeating steps a1)-a3) once or twice, each time replacing the first milk of step a1) with the latest lactose-reduced milk mixture, and
a5) using the latest lactose-reduced milk mixture as the milk-related feed.

The milk used to prepare the milk-related feed may be e.g. a skimmed milk or semi-skimmed milk. The milk fat content of the milk used to prepare the milk-related feed may be at most 5% (w/w), preferably most 3.5% (w/w), and even more preferably at most 2% (w/w). For example, the fat content of the milk used to prepare the milk-related feed may be at most 1.5% (w/w). Preferably the fat content of the milk is at most 0.5% (w/w). Even more preferably the fat content of the milk is at most 0.1% (w/w).

The ultrafiltration and nanofiltration processes are well-known in the art. The membrane used for nanofiltration may for example have a pore size in the range of $10^{-3}$ - $10^{-2}$ micron. The membrane used for ultrafiltration may for example have a pore size in the range of $10^{-2}$ - $10^{-1}$ micron.

In some embodiments of the invention the lactose-reduced milk-related feed comprises at most 3% (w/w) lactose relative to the total weight of the lactose-reduced milk-related feed. For example, the lactose-reduced milk-related feed may comprise at most 2% (w/w) lactose relative to the total weight of the lactose-reduced milk-related feed, preferably at most 1% (w/w), and even more preferably at most 0.5% (w/w) lactose relative to the total weight of the lactose-reduced milk-related feed.

Even lower levels of lactose may be desirable, thus in some embodiments of the invention the lactose-reduced milk-related feed comprises at most 0.2% (w/w) lactose relative to the total weight of the lactose-reduced milk-related feed. For example, the lactose-reduced milk-related feed may comprise at most 0.1% (w/w) lactose relative to the total weight of the lactose-reduced milk-related feed, preferably at most 0.05% (w/w), and even more preferably at most 0.01% (w/w) lactose relative to the total weight of the lactose-reduced milk-related feed.

In some embodiments of the invention the lactose-reduced milk-related feed comprises 0.01-2% (w/w) glucose relative to the total weight of the lactose-reduced milk-related feed. For example, the lactose-reduced milk-related feed may comprise 0.02-1.5% (w/w) glucose relative to the total weight of the lactose-reduced milk-related feed, preferably 0.05-1% (w/w), and even more preferably 0.1-0.5% (w/w) glucose relative to the total weight of the lactose-reduced milk-related feed.

Sometimes lower levels of glucose may be desirable, thus in some embodiments of the invention the lactose-reduced milk-related feed comprises 0.01-0.5% (w/w) glucose relative to the total weight of the lactose-reduced milk-related feed. For example, the lactose-reduced milk-related feed may comprise 0.02-0.3% (w/w) glucose relative to the total weight of the lactose-reduced milk-related feed, preferably 0.04-0.2% (w/w), and even more preferably 0.05-0.1% (w/w) glucose relative to the total weight of the lactose-reduced milk-related feed.

In some embodiments of the invention the lactose-reduced milk-related feed comprises 0.01-2% (w/w) galactose relative to the total weight of the lactose-reduced milk-related feed. For example, the lactose-reduced milk-related feed may comprise 0.02-1.5% (w/w) galactose relative to the total weight of the lactose-reduced milk-related feed, preferably 0.05-1% (w/w), and even more preferably 0.1-0.5% (w/w) galactose relative to the total weight of the lactose-reduced milk-related feed.

Lower levels of galactose may be desirable, thus in some embodiments of the invention the lactose-reduced milk-related feed comprises 0.01-0.5% (w/w) galactose relative to the total weight of the lactose-reduced milk-related feed. For example, the lactose-reduced milk-related feed may comprise 0.02-0.3% (w/w) galactose relative to the total weight of the lactose-reduced milk-related feed, preferably 0.04-0.2% (w/w), and even more preferably 0.05-0.1% (w/w) galactose relative to the total weight of the lactose-reduced milk-related feed.

In some preferred embodiments of the invention, the milk-related feed comprises a total amount of mono- and disaccharides in the range of 0.5 - 4% (w/w) relative to the total weight of the milk-related feed. For example, the milk-related feed may comprise a total amount of mono- and disaccharides in the range of 0.7 - 3.5% (w/w) relative to the total weight of the milk-related feed, preferably in the range of 1 - 3.2% (w/w), and even more preferably in the range of 1-3% (w/w) relative to the total weight of the milk-related feed.

The milk-related feed provided in step a) is preferably a liquid milk-related feed. As used herein the term "milk-related feed" includes lactose-reduced whole milk, skim milk, fat-free milk, low fat milk, full fat milk, or concentrated milk.

Fat-free milk is a non-fat or skim milk product. Low-fat milk is typically defined as milk that contains from about 1% to about 2% fat. Full fat milk often contains about 3.25% fat. As used herein, the term "milk" is also intended to encompass milks from animal and plant sources.

Animal sources of milk include, but are not limited to, human, cow, sheep, goat, buffalo, camel, llama, mare and deer.

In a preferred embodiment of the invention, the milk-related feed comprises bovine milk.

Plant sources of milk include, but are not limited to, milk extracted from soybean. In addition, the term "milk-related feed" refers to not only whole milk, but also skim milk or any liquid component derived therefrom, such as whey or milk serum. By "whey" or "milk serum" is meant the milk component remaining after all, or a substantial portion of the milk fat and casein contained in milk, are removed. The term whey also encompass so-called sweet whey which is the byproduct of rennet-based cheese production, and acid whey which is the byproduct of the acidification of milk, which typically takes place during the production of caseinate or quark and cream cheese.

In an embodiment of the invention, the milk-related feed of step a) comprises at most 60% w/w milk fat. An example of such a milk-related feed is cream double.

In another embodiment of the invention, the milk-related feed of step a) comprises at most 40% w/w milk fat. An example of such a milk-related feed is whipping cream.

In yet an embodiment of the invention, the milk-related feed of step a) comprises at most 20% w/w milk fat. An example of such a milk-related feed is single cream/table cream containing approx. 18% w/w milk fat.

In a further embodiment of the invention, the milk-related feed of step a) comprises at most 4% w/w milk fat. An example of such a milk-related feed is full fat milk which typically contains 2-4% w/w milk fat, and preferably approx. 3% w/w milk fat.

In a further embodiment of the invention, the milk-related feed of step a) comprises at most 2% w/w milk fat. An example of such a milk-related feed is semi-skim milk which typically contains 0.7-2% w/w milk fat, and preferably 1-1.5% w/w milk fat.

In an additional embodiment of the invention, the milk-related feed of step a) comprises at most 0.7 w/w milk fat. An example of such a milk-related feed is skim milk which normally contains 0.1-0.7% w/w milk fat, and preferably 0.3-0.6% w/w milk fat, such as approx. 0.5% w/w milk fat.

In a preferred embodiment of the invention, the milk-related feed of step a) comprises at most 0.1% w/w milk fat. An example of such a milk-related feed is skim-milk having a fat content in the range of 0.05-0.1% w/w.

In the context of the present invention, when a composition is said to comprise, contain or have X % (w/w) of a specified component, the weight percentage of the specified component is calculated relative to the total weight of the composition unless it is stated otherwise.

The milk-related feed normally comprises water, and may e.g. comprise at least 50% (w/w) water, preferably at least 70% (w/w) water, and even more preferably at least 80% (w/w) water. For example, the milk derivative may comprise at least 85% (w/w) water, preferably at least 90% (w/w) water, and even more preferably at least 95% (w/w) water.

In a particularly preferred embodiment of the invention, the milk-related feed of step a) comprises lactose-reduced milk. The milk-related feed may e.g. consist of lactose-reduced milk.

In some embodiments of the invention, the milk-related feed of step a) comprises 2.5-4.5% w/w casein, 0.25-1% w/w milk serum protein, and 0.01-3% w/w milk fat. In some preferred embodiments of the invention, the milk-related feed of step a) comprises 2.5-4.5% w/w casein, 0.25-1% w/w milk serum protein, and 0.1-1.5% w/w milk fat. In other preferred embodiments of the invention, the milk-related feed of step a) comprises 2.5-4.5% w/w casein, 0.25-1% w/w milk serum protein, and 0.01-0.1% w/w milk fat.

In the context of the present invention the term "milk serum protein" relates to the non-casein proteins of raw bovine milk.

The method of the invention may preferably be used for treating fresh milk-related feed, i.e. milk-related feed based on milk which has recently been milked from the source of the milk-related feed, e.g. from cows. For example, it may be preferred that the milk-related feed is at most 48 hours old, i.e. at most 48 hours since milking, and more preferably at most 36 hours old, such as at most 24 hours old.

It is preferred that the milk-related feed is of good quality and normally the milk-related feed comprises at most 100,000 colony forming units (cfu)/mL, preferably at most 50,000 cfu/mL, and even more preferably at most 25,000 cfu/mL. It may even be preferred that the milk-related feed comprises at most 10,000 cfu/mL, such as at most 7,500 cfu/mL.

The milk-related feed of step a) may comprise one or more additives. For example, the one or more additives may contain a flavour. Useful flavours are e.g. strawberry, chocolate, banana, mango, and/or vanilla.

Alternatively, or in addition, the one or more additives may contain one or more vitamins. Useful vitamins are e.g. vitamin A and/or vitamin D. Other vitamins such as vitamin B, C, and/or E may also be useful.

Alternatively, or in addition, the one or more additives may also contain one or more minerals. An example of a useful mineral is the milk mineral supplement Capolac MM-0525 (Arla Foods Ingredients Amba, Denmark). Another useful additive is whey protein.

In a preferred embodiment of the invention, the milk-related feed of step a) has been pasteurised and possibly also homogenized.

Step b) of the invention involves subjecting a milk derivative derived from said milk-related feed to a High Temperature (HT)-treatment, wherein the milk derivative is heated to a temperature in the range of 140 - 180 degrees C, kept in that temperature range for a period of at most 200 msec, and then finally cooled,

In the context of the present invention, when a milk derivative is "derived" from milk-related feed it means that at least 80% (w/w) of the solids of the milk-related feed are included in the milk derivative. For example at least 90% (w/w) of the solids of the milk-related feed may be included in the milk derivative, preferably at least 95% (w/w), and even more preferably at least 99% (w/w) of the solids. It should be noted that some of the solids of the milk-related feed may be present in the milk derivative in the same form as in the milk-related feed or they may have been modified, e.g. by heating, oxidation or enzymatic degradation. For example, some of the solids of the milk-related feed may be present in the milk derivative in hydrolyzed form or denatured form. For example, some of the lactose of the milk-related feed may for example be present in the milk derivative in the form of glucose and galactose, which are the hydrolysis products of lactose. Some proteins, which were in their native form in the milk-related feed, may be present in the milk derivative in a denatured form.

When a milk derivative is derived from a milk-related feed, it is furthermore preferred that a substantial amount of the water of the milk-related feed is included in the milk derivative. For example, at least 80% (w/w) of the water of the milk-related feed may be included in the milk derivative. Alternatively, at least 90% (w/w) of the water of the milk-related feed may be included in the milk derivative, preferably at least 95% (w/w), and even more preferably at least 99% (w/w) of the water, such as e.g. substantially all water of the milk-related feed.

In the context of the present invention, the term "solids" relates to the molecules that would remain if all water was removed from the milk. The term "solids" includes carbohydrates, proteins, peptides, milk fat, minerals, acids, vitamins and other small, non-water molecules.

The milk derivative may for example contain a substantial amount of the milk-related feed. For example, the milk derivative may be identical to the milk-related feed. Alternatively, the milk derivative may essentially consist of the milk-related feed.

In the context of the present invention the term "essentially consist of" means that the mentioned product or composition consists of the mentioned components as well additional optional components which do not materially affect the basic and novel characteristics of the invention.

In a preferred embodiment of the invention deriving the milk derivative from the milk-related feed involves subjecting the milk-related feed to an enzyme inactivation step.

The enzyme inactivation step may for example comprise adjusting the temperature of the milk-related feed to a temperature in the range of 70-95 degrees C and keeping the temperature of the milk-related feed in that range for a period in the range of 30-500 seconds.

In a preferred embodiment of the invention deriving the milk derivative from the milk-related feed involves hydrolysing at least some of the lactose of the milk-related feed.

The hydrolysis of lactose may for example comprise contacting the milk-related feed with a lactase enzyme.

In some embodiments of the invention the hydrolysis is performed after the enzyme inactivation step.

In other embodiments of the invention the enzyme inactivation step is performed after the hydrolysis.

In some embodiments of the invention deriving the milk derivative from the milk-related feed furthermore involves adding a lipid source to the milk-related feed.

In some embodiments of the invention the milk derivative comprises at most 3% (w/w) lactose relative to the total weight of the milk derivative. For example, the milk derivative may comprise at most 2% (w/w) lactose relative to the total weight of the milk derivative, preferably at most 1% (w/w), and even more preferably at most 0.5% (w/w) lactose relative to the total weight of the milk derivative.

Even lower levels of lactose may be desirable, thus in some embodiments of the invention the milk derivative comprises at most 0.2% (w/w) lactose relative to the total weight of the milk derivative. For example, the milk derivative may comprise at most 0.1% (w/w) lactose relative to the total weight of the milk derivative, preferably at most 0.05% (w/w), and even more preferably at most 0.01% (w/w) lactose relative to the total weight of the milk derivative.

In some embodiments of the invention the milk derivative comprises 0.01-2% (w/w) glucose relative to the total weight of the milk derivative. For example, the milk derivative may comprise 0.02-1.5% (w/w) glucose relative to the total weight of the milk derivative, preferably 0.05-1% (w/w), and even more preferably 0.1-0.5% (w/w) glucose relative to the total weight of the milk derivative.

Sometimes lower levels of glucose may be desirable, thus in some embodiments of the invention the milk derivative comprises 0.01-0.5% (w/w) glucose relative to the total weight of the milk derivative. For example, the milk derivative may comprise 0.02-0.3% (w/w) glucose relative to the total weight of the milk derivative, preferably 0.04-0.2% (w/w), and even more preferably 0.05-0.1% (w/w) glucose relative to the total weight of the milk derivative.

In some embodiments of the invention the milk derivative comprises 0.01-2% (w/w) galactose relative to the total weight of the milk derivative. For example, the milk derivative may comprise 0.02-1.5% (w/w) galactose relative to the total weight of the milk derivative, preferably 0.05-1% (w/w), and even more preferably 0.1-0.5% (w/w) galactose relative to the total weight of the milk derivative.

Lower levels of galactose may be desirable, thus in some embodiments of the invention the milk derivative comprises 0.01-0.5% (w/w) galactose relative to the total weight of the milk derivative. For example, the milk derivative may comprise 0.02-0.3% (w/w) galactose relative to the total weight of the milk derivative, preferably 0.04-0.2% (w/w), and even more preferably 0.05-0.1% (w/w) galactose relative to the total weight of the milk derivative.

In some preferred embodiments of the invention, the milk derivative comprises a total amount of mono- and disaccharides in the range of 0.5 - 4% (w/w) relative to the total weight of the milk derivative. For example, the milk derivative may comprise a total amount of mono- and disaccharides in the range of 0.7 - 3.5% (w/w) relative to the total weight of the milk derivative, preferably in the range of 1 - 3.2% (w/w), and even more preferably in the range of 1-3% (w/w) relative to the total weight of the milk derivative.

In some preferred embodiments of the invention the temperature of the milk derivative immediately before the HT-treatment is in the range of 60-85 degrees C, preferably in the range 62-80 degrees C, and even more preferably in the range of 65-75 degrees C. Preliminary experiments indicate that if the temperature of the milk derivative is in these temperature ranges, less fouling occurs in the HT-treatment system.

In an embodiment of the invention, the milk derivative consists of the milk-related feed of step a).

However, in another embodiment of the invention, the milk-related feed has been added one or more additives, e.g. a milk fat, prior to the HT-treatment and in this case the milk derivative comprises both the one or more additives (e.g. milk fat) and the milk-related feed.

In an embodiment of the invention, the milk derivative comprises at least 50% (w/w) milk-related feed of step a), preferably at least 75% (w/w) milk-related feed, and even more preferably at least 85% (w/w) milk-related feed. For example, the milk derivative may comprise at least 90% (w/w) milk-related feed of step a), preferably at least 95% (w/w) milk-related feed, and even more preferably at least 97.5% (w/w) milk-related feed.

The milk derivative normally comprises water and may e.g. comprise at least 50% (w/w) water, preferably at least 70% (w/w) water, and even more preferably at least 80% (w/w) water. For example, the milk derivative may comprise at least 85% (w/w) water, preferably at least 90% (w/w) water, and even more preferably at least 95% (w/w) water.

In a preferred embodiment of the invention, the milk derivative furthermore comprises one or more lipid sources.

The one or more lipid sources may for example comprise a vegetable fat and/or a vegetable oil. It is furthermore possible that the one or more lipid sources consist of a vegetable fat and/or a vegetable oil. This is typically the case when the milk-related product is a so-called filled milk, i.e. a milk product wherein at least a portion of the original milk fat has been replaced with a non-dairy lipid source such as vegetable oil or vegetable fat.

The vegetable oil may e.g. comprise one or more oils selected from the group consisting of sunflower oil, corn oil, sesame oil, soya bean oil, palm oil, linseed oil, grape seed oil, rapeseed oil, olive oil, groundnut oil and combinations thereof.

If a vegetable fat is desired, the vegetable fat may e.g. comprise one or more fats selected from the group consisting of palm oil-based vegetable fat, palm kernel oil-based vegetable fat, peanut butter, cacao butter, coconut butter, and combinations thereof.

In a preferred embodiment of the invention, the one or more lipid sources comprise(s), or even consist(s) of, a milk fat source.

The milk fat source may e.g. comprise one or more lipid sources selected from the group consisting of a cream, a cream double, an anhydrous butter fat, a whey cream, a butter oil, a butter oil fraction, and combinations thereof.

Production of long shelf-life milk typically involves UHT-treatment of the milk fat fraction of the milk. The present inventors have found that even though the UHT-treated milk fat, e.g. cream, is only added to the long shelf-life milk in relatively small quantities, it may still contribute to an undesired cooked taste. The present inventors have additionally found that one may subject the milk fat, e.g. cream, to milder thermal treatment, than what is normally done, without losing the long shelf-life of the milk.

Thus, in a preferred embodiment of the invention, the one or more lipid sources, e.g. the milk fat source, such as cream, have been heat-treated by adjusting the temperature of the lipid source(s) to a temperature in the range of 70-100 degrees C for a period of 2-200 seconds. For example, the one or more lipid sources may be heat-treated by adjusting the temperature of the lipid source(s) to a temperature in the range of 70-85 degrees C for a period of 100-200 seconds. Alternatively, the one or more lipid sources may be heat-treated by adjusting the temperature of the lipid source(s) to a temperature in the range of 85-100 degrees C for a period of 2-100 seconds.

In another preferred embodiment of the invention, the one or more lipid sources, e.g. the milk fat source, such as cream, have been heat treated by adjusting the temperature of the lipid source(s) to a temperature in the range of 100-180 degrees C for a period of 10 msec. - 4 sec.

For example, the one or more lipid sources may be heat-treated by adjusting the temperature of the lipid source(s) to a temperature in the range of 100-130 degrees C for a period of 0.5-4 seconds. Alternatively, the one or more lipid sources may be heat-treated by adjusting the temperature of the lipid source(s) to a temperature in the range of 130-180 degrees C for a period of 10 msec. - 0.5 seconds.

Alternatively, the HT-treatment described in the context of step b) may e.g. be used for separate heat-treatment of the one or more lipid sources.

The HT-treatment of step b) involves heating the milk derivative to a temperature in the range of 140-180 degrees C, preferably 145-170 degrees C, and even more preferably 150-160 degrees C.

In an embodiment of the invention, the HT-treatment of step b) involves heating the milk derivative to a temperature in the range of 140-170 degrees C, preferably 145-160 degrees C, and even more preferably 150-155 degrees C.

In another embodiment of the invention, the HT-treatment of step b) involves heating the milk derivative to a temperature in the range of 150-180 degrees C, preferably 155-170 degrees C, and even more preferably 160-165 degrees C.

In yet an embodiment of the invention, the milk derivative has a temperature in the range of 70-75 degrees C when provided to step b).

The high temperature of the HT-treatment may e.g. vary at most +/- 2 degrees C from the intended temperature, preferably at most +/- 1 degrees C, and even more preferred at most +/- 0.5 degrees C, such as at most +/- 0.25 degrees C.

In a preferred embodiment of the invention, the temperature of the milk derivative is kept in the HT-temperature range for a period of at most 200 msec., preferably at most 150 msec., and even more preferably at most 100 msec.

For example, the temperature of the milk derivative may be kept in the HT-temperature range for a period of 10-200 msec., preferably 25-150 msec., and even more preferably 30-100 msec.

In another embodiment of the invention, the temperature of the milk derivative is kept in the HT-treatment temperature range for a period of 10-100 msec., preferably 25- 90 msec., and even more preferably 30-70 msec.

The relationship between the process parameters and the time in which the temperature of the milk derivative is kept in the HT-treatment temperature range, sometimes referred to as the "holding time", is typically provided by the equipment manufacturer.

If not, the holding time may be determined as outlined below:

1. Calculate the heat capacity of the feed from the milk derivative via empirical formulas
2. Calculate the required energy (kg/hour steam) to raise the feed temperature from the preheating temperature to the desired heat treatment temperature
3. Calculate the excess steam (used for transport) by subtracting the required heating steam flow from the total steam flow
4. Determine the exact volume of the holding cell
5. Determine the volumetric flow rates of material into and through the process unit, including any volumetric changes (for example heating steam condensation)
6. Calculate the holding time by dividing the holding cell volume by the volumetric flow rate.

In a preferred embodiment of the invention, the duration of the HT-treatment, including heating, holding, and cooling the milk derivative, is at most 500 msec., preferably at most 300 msec., and even more preferably at most 200 msec., such as at most 150 msec.

For example, the duration of the HT-treatment, including heating, holding, and cooling the milk derivative, may be at most 400 msec., preferably at most 350 msec., and even more preferably at most 250 msec., such as at most 175 msec.

The duration of the HT-treatment, including heating, holding, and cooling the milk derivative, may be calculated as the duration of the period(s) wherein the temperature of the milk derivative is at least 95 degrees C.

The cooling of step b) preferably cools the milk derivative to a temperature of at most 90 degrees C, such as at most 70 degrees C. In an embodiment of the invention, the milk derivative is cooled to a temperature in the range of 2-90 degrees C, preferably in the range of 70-95 degrees C, and even more preferably in the range of 72-85 degrees C.

In a preferred embodiment of the invention, the duration of the cooling of the HT-treatment is at most 50 msec., preferably at most 10 msec., and even more preferably at most 5 msec., such as 1 msec.

The heating of the HT-treatment of step b) must be able to rapidly increase the temperature of the milk derivative. Such rapid temperature increases may be accomplished by contacting the milk derivative with steam. Thus, in a preferred embodiment of the invention, the heating of the HT-treatment is performed by contacting the milk derivative with steam. There are different techniques available for contacting the milk derivative with steam. One of these is direct steam injection in which steam is injected into the liquid to be heated. Another technique is steam infusion wherein the liquid to be heated is infused into a steam-filled chamber.

The temperature of the steam is typically somewhat higher than the desired treatment temperate of the HT-treatment, for example at most 10 degrees C higher than the desired treatment temperate of the HT-treatment, preferably at most 5 degrees C higher, an even more preferred at most 3 degrees C higher.

For example, the heating of the HT-treatment may comprise contacting the milk derivative with steam, and it should be noted that other energy sources may contribute to the heating as well.

In an embodiment of the invention, the heating of the HT-treatment comprises, or consists of, subjecting the milk derivative to electromagnetic energy. Examples of useful electromagnetic energy are IR radiation and/or microwave radiation.

It is also important that the heated milk derivative is rapidly cooled as part of the HT-treatment, and in a preferred embodiment of the invention, the cooling of the HT-treatment comprises, or consists of, flash cooling.

In the context of the present invention, the term "flash cooling" is the cooling obtained by introducing, e.g. spraying, a hot liquid or aerosol into a vacuum chamber, whereby parts of the liquid evaporates and rapidly cools the remaining liquid.

Examples of useful HT-treatment systems are e.g. the Saniheat™-system Gea Niro (Denmark), the Linient Steam Injection (LSI™)-system of Gea Niro (Denmark) or the Instant Infusion System (IIS) of Invensys APV (Denmark).

Example for useful HT-treatment systems are e.g. found in the International patent applications WO 2006/123,047 A1 and WO 98/07,328, which both are incorporated herein by reference for all purposes.

General aspects of high temperature treatment are e.g. found in "Thermal technologies in food processing" ISBN 185573558 X, which is incorporated herein by reference for all purposes.

Step c) of the method involves packaging a lactose-reduced milk-related product derived from the HT-treated milk derivative.

In the context of the present invention, when a milk-related product is "derived" from HT-treated milk derivative it means that at least 80% (w/w) of the solids of the HT-treated milk derivative are included in the milk-related product. For example, at least 90% (w/w) of the solids of the HT-treated milk derivative may be included in the milk-related product. Preferably at least 95% (w/w) of the solids of the HT-treated milk derivative are included in the milk-related product. Even more preferably at least 99% (w/w) of the solids of the HT-treated milk derivative are included in the milk-related product. It should be noted that some of the solids of the HT-treated milk derivative may be present in the milk-related product in the same form as in the HT-treated milk derivative, or some of them may have been modified, e.g. by heating, oxidation or enzymatic degradation. For example, some of the solids of the HT-treated milk derivative may be present in the milk-related product in hydrolysed form or denatured form. For example, some of the lactose of the HT-treated milk derivative may for example be present in the milk-related product in the form of glucose and galactose, which are the hydrolysis products of lactose. Some proteins, which were in their native form in the HT-treated milk derivative, may be present in the milk-related product in a denatured form.

When a milk-related product is derived from a HT-treated milk derivative, it is furthermore preferred that a substantial amount of the water of the HT-treated milk derivative is included in the milk-related product. For example, at least 80% (w/w) of the water of the HT-treated milk derivative may be included in the milk-related product. Alternatively, at least 90% (w/w) of the water of the HT-treated milk derivative may be included in the milk-related product, preferably at least 95% (w/w), and even more preferably at least 99% (w/w) of the water, such as e.g. substantially all water of the HT-treated milk derivative.

The milk-related product may for example contain a substantial amount of the HT-treated milk derivative. For example, the milk-related product may be identical to the HT-treated milk derivative. Alternatively, the milk-related product may essentially consist of the HT-treated milk derivative.

In a preferred embodiment of the invention deriving the lactose-reduced milk-related product from the HT-treated milk derivative involves subjecting the HT-treated milk derivative to an enzyme inactivation step.

The enzyme inactivation step may e.g. comprise adjusting the temperature of the HT-treated milk derivative to a temperature in the range of 70-95 degrees C and keeping the temperature of the HT-treated milk derivative in that range for a period in the range of 30-500 seconds.

In a preferred embodiment of the invention deriving the lactose-reduced milk-related product from the milk derivative involves hydrolysis at least some of the lactose of the HT-treated milk derivative.

The hydrolysis of lactose may e.g. comprise contacting the HT-treated milk derivative with a lactase enzyme.

In some preferred embodiments of the invention the hydrolysis is performed after the enzyme inactivation step.

In other preferred embodiments of the invention the enzyme inactivation step is performed after the hydrolysis.

The packaging of step c) may be any suitable packaging techniques, and any suitable container may be used for packaging the milk-related product of the invention.

However, in a preferred embodiment of the invention, the packaging of step c) is aseptic packaging, i.e. the milk-related product is packaged under aseptic conditions. For example, the aseptic packaging may be performed by using an aseptic filling system, and it preferably involves filling the milk into one or more aseptic container(s).

Examples of useful containers are e.g. bottles, cartons, bricks, and/or bags.

The packaging is preferably performed at or below room temperature. Thus, the temperature of the lactose-reduced milk-related product is preferably at most 30 degrees C during the packaging, preferably at most 25 degrees C and even more preferably at most 20 degrees C, such as at most 10 degrees C.

The temperature of the lactose-reduced milk-related product during packaging may for example be in the range of 2-30 degrees C, and preferably in the range of 5-25 degrees C.

In an embodiment of the invention, the lactose-reduced milk-related product comprises at least 50% (w/w) HT-treated milk derivative of step b), preferably at least 75% (w/w) HT-treated milk derivative of step b), and even more preferably at least 85% (w/w) HT-treated milk derivative of step b). For example, the lactose-reduced milk-related product may comprise at least 90% (w/w) HT-treated milk derivative of step b), preferably at least 95% (w/w) HT-treated milk derivative of step b), and even more preferably at least 97.5% (w/w) HT-treated milk derivative of step b).

The lactose-reduced milk-related product normally comprises water, and may e.g. comprise at least 50% (w/w) water, preferably at least 60% (w/w) water, and even more preferably at least 70% (w/w) water. For example, the lactose-reduced milk-related product may comprise at least 75% (w/w) water, preferably at least 80% (w/w) water, and even more preferably at least 85% (w/w) water.

In a preferred embodiment of the invention, the lactose-reduced milk-related product comprises at least 90% (w/w) water.

Additionally, the lactose-reduced milk-related product may contain the same additives as the milk-related feed and/or the milk derivative.

Another aspect of the invention relates to a milk-related product obtainable by the method of the invention. For example, the milk-related product may be the HT-treated milk derivatives of step b) or alternatively, it may be the packaged lactose-reduced milk-related product of step c).

For long shelf-life milk products, undesired enzyme activity may be just as problematic as microbial growth, and therefore the method of the invention also comprises an enzyme inactivation step.

In a preferred embodiment of the invention, said enzyme inactivation step comprises adjusting the temperature of the liquid to be treated to a temperature in the range of 70-95 degrees C for a period in the range of 30-500 seconds.

For example, the temperature of the liquid to be treated may be adjusted to a temperature in the range of 70-80 degrees C for a period in the range of 30-500 seconds, preferably 40-300 seconds, and even more preferably 50-150 seconds.

In a preferred embodiment of the invention, the temperature of the liquid to be treated is adjusted to a temperature in the range of 70-75 degrees C for a period in the range of 30-500 seconds, preferably 40-300 seconds, and even more preferably 50-150 seconds.

Alternatively, the temperature of the liquid to be treated may be adjusted to a temperature in the range of 75-85 degrees C for a period in the range of 30-500 seconds, preferably 40-300 seconds, and even more preferably 50-150 seconds.

Alternatively the temperature of the liquid to be treated may be adjusted to a temperature in the range of 80-95 degrees C for a period in the range of 10-300 seconds, preferably 25-200 seconds, and even more preferably 30-100 seconds.

Such a temperature treatment has proven to reduce the activity of enzymes, such as plasmin, as well as pro-enzymes, such as plasminogen.

The enzyme inactivation step reduces the combined activity of plasmin and plasminogen of the treated liquid by at least 60% relative to the activity of the untreated liquid, preferably by at least 65%, and even more preferably by at least 70%.

The combined activity is a measure of the activity of plasmin in the milk-related product plus the activity that can be gained from converting plasminogen into plasmin. The combined activity is determined according to analysis G of Example I.

Some embodiments of the invention require even lower levels of combined plasmin and plasminogen activity, and for such embodiments the enzyme inactivation step should preferably reduce the combined activity of plasmin and plasminogen of the treated liquid by at least 80% relative to the activity of the untreated liquid, preferably by at least 85% and even more preferably by at least 90%.

In preferred embodiments of the invention, the enzyme inactivation step should reduce the combined activity of plasmin and plasminogen of the treated liquid by at least 95% relative to the activity of the untreated liquid, preferably by at least 97.5%, and even more preferably by at least 99%.

In an embodiment of the invention, the combined activity of plasmin and plasminogen of the milk-related product is at most 8.000 microUnits/mL, preferably at most 5.000 microUnits/mL and even more preferably at most 3.000 microUnits/mL.

In the context of the present invention, a plasmin activity of one Unit (U) is the plasmin activity which can produce 1 micromol p-Nitroaniline per minute at 25 degrees C, pH 8.9, using Chromozyme PL (Tosyl-Gly-Pro-Lys-4-nitranilide acetate) as substrate.

In another embodiment of the invention, the combined activity of plasmin and plasminogen of the milk-related product is at most 2.500 microUnits/mL, preferably at most 1.000 microUnits/mL, and even more preferably at most 750 microUnits/mL. It may even be preferred that the combined activity of plasmin and plasminogen of the milk-related product is at most 600 microUnits/mL, preferably at most 400 microUnits/mL, and even more preferably at most 200 micro-Units/mL.

The enzyme inactivation step may be performed during different stages of the method, for example, before the hydrolysis of lactose, before the HT-treatment, and/or before the packaging.

As mentioned herein, the method of the invention involves a step of hydrolysing at least some of the lactose into glucose and galactose. The hydrolysis of lactose may e.g. comprise contacting the lactose with a lactase enzyme.

A number of different lactase enzymes are commercially available and an example of a useful lactase enzyme is e.g. Lactozym® Pure (Novozymes, Denmark).

The enzyme preferably contacts the composition which contains the lactose, e.g. the milk-related feed and/or the HT-treated milk derivative.

In some embodiments of the invention the enzyme is added to the milk-related feed and/or the HT-treated milk derivative. The enzyme may e.g. be present in the milk-related feed and/or the HT-treated milk derivative in dissolved form, e.g. as single enzyme molecules or as soluble aggregates of enzyme molecules.

In other embodiments of the invention the lactase enzyme is separate from the milk-related feed and/or the HT-treated milk derivative, but brought in contact with the lactose by contacting the enzyme with the milk-related feed and/or the HT-treated milk derivative. For example, enzyme immobilised on a stationary solid phase may be used. Examples of useful stationary solid phases are e.g. a filter, a packed bed of enzyme-containing particles, or similar structures.

Alternatively, the solid phase may e.g. be a free flowing, particulate solid phase, e.g. organic or inorganic beads, forming part of the liquid.

The temperature of the liquid, in which lactose is to be hydrolysed, is preferably kept relatively low to avoid unwanted microbial growth. In some embodiments of the invention the temperature of the liquid, e.g. the milk-related feed or the HT-treated milk derivative, during the hydrolysis is in the range of 1-15 degrees C. The temperature of the liquid during the hydrolysis may e.g. be in the range of 2-12 degrees C, preferably in the range of 3-10 degrees C, and even more preferably in the range of 4-8 degrees C.

The duration of the hydrolysis depends on the used activity of the enzyme and well as in which form (e.g. immobilised or added to the liquid) it is used. It is preferred that the hydrolysis takes at most 48 hours, and preferably at most 24 hours, such as at most at most 12 hours. The hydrolysis may for example take place in a cooled tank in which the liquid, e.g. the milk-related feed or the HT-treated milk derivative, is mixed with the enzyme.

Details relating to the industrial use of enzymes including immobilisation techniques and suitable solid phase types can be found in "Biocatalysts and Enzyme technology", Klaus Buchholz et al., ISBN-10: 3-527-30497-5, 2005, Wiley VCH Verlag GmbH, which is incorporated herein by reference for all purposes.

The present inventors have seen indications that, contrary to what one would expect, performing the lactose hydrolysis reaction prior to the HT-treatment provided products having an acceptable taste despite the presence of reactive monosaccharides during the HT-treatment of the milk derivative. Thus, in preferred embodiments of the invention, the hydrolysis of lactose is performed prior to the HT-treatment of the milk derivative.

In some embodiments of the invention the lactase enzyme is still present and active in the milk-related product when the milk-related product is packaged. This approach simplifies the process and saves the time and costs for operating hydrolysis tanks or continuous hydrolysis reactors.

In other embodiments of the invention the lactase enzyme has been inactivated prior to the packaging, e.g. by one of the heating or inactivation steps already mentioned herein or using an additional heating step.

In some embodiments of the invention the method furthermore involves physically separating microorganisms from the milk-related feed, and thereby obtaining a partly sterilised milk derivative. This separation actually removes microorganisms from the milk-related feed contrary to other sterilisation techniques which only kill the microorganisms and leave the dead microorganisms in the milk.

In the context of the present invention, the term "microorganisms" relates to e.g. bacteria and bacterial spores, yeasts, moulds and fungal spores.

The physical separation may e.g. remove at least 90% of the microorganisms of the milk-related feed, preferably at least 95% of the microorganisms, and even more preferably at least 99% of the microorganisms of the milk-related feed.

In an embodiment of the invention, the physically separation involves bactofugation of said milk-related feed.

In another embodiment of the invention, the physically separation involves microfiltration of said milk-related feed.

In a preferred embodiment of the invention, the microfiltration is performed using a filter having a pore size in the range of 0.5-1.5 micron, preferably in the range of 0.6-1.4 micron, even more preferably in the range of 0.8-1.2 micron.

These pore size ranges have been found to be advantages as they retain most of the microorganisms of the milk-related feed with substantially no alteration of the protein composition of milk derivate.

In an embodiment of the invention, the used microfilter is a cross-flow microfilter.

Suitable microfiltration system can e.g. be found in Tetra Pak Dairy processing Handbook 2003 (ISBN 91-631-3427-6), which is incorporated herein by reference for all purposes.

In yet an embodiment of the invention, the physical separation involves both bactofugation and microfiltration of said milk-related feed.

In an embodiment of the invention, the bactofugation comprises the use of at least one bactofuge, preferably at least two bactofuges in series, and even more preferably at least three bactofuges in series.

The physical separation is preferably performed at, below, or slightly above ambient temperature. Thus, the temperature of the milk-related feed may be at most 60 degrees C during the physical separation, e.g., at most 40 degrees C, such as at most 20 degrees C, or at most 10 degrees C.

The temperature of the milk-related feed during physical separation may for example be in the range of 2-60 degrees C, and preferably in the range of 25-50 degrees C.

Suitable bactofuges, including one one-phase or two-phase Bactofuges, can e.g. be found in Tetra Pak Dairy processing Handbook 2003 (ISBN 91-631-3427-6), which is incorporated herein by reference for all purposes.

However, in some embodiments of the invention deriving the milk derivative from the milk-related feed does not involve physically separating microorganisms from the milk-related feed.

In other embodiments of the invention deriving the milk derivative from the milk-related feed does not involve physically separating microorganisms from any milk-related stream of the method.

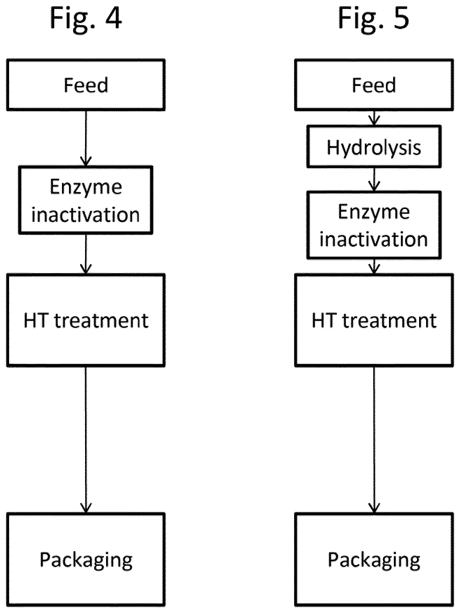

Different exemplary embodiments of the invention are shown in Figs. 5-7 and 9-11. Note that these figures do not show all the details of the depicted process embodiments and that the embodiments may contain various additional process steps, such as e.g. temperature adjustments, homogenisation, and storing.

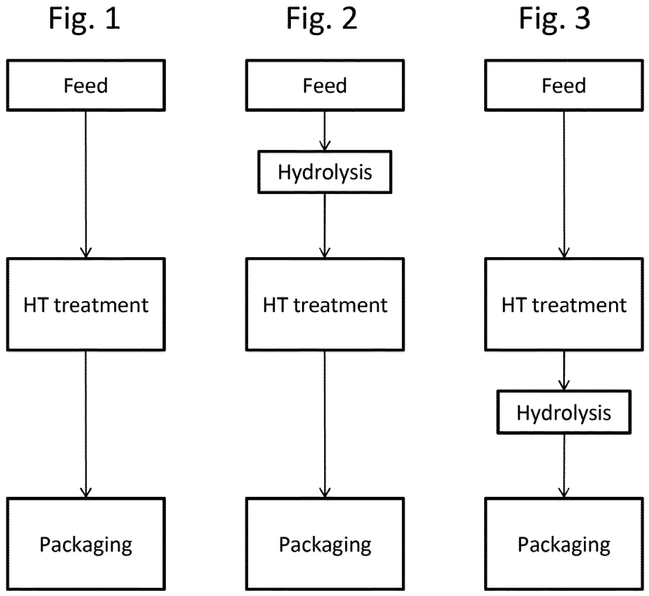

Figure 1 shows a schematic flow diagram of an embodiment not according to the invention in which the milk-related feed is subjected to a HT-treatment. In this case the milk derivative is, or essentially consists of, the milk-related feed. The HT-treated milk derivative obtained from step c) is subsequently packaged. In this embodiment the milk-related product is, or essentially consists of, the HT-treated milk derivative.

Figure 2 shows a schematic flow diagram of an embodiment not according to the invention in which at least some of the lactose of the milk-related feed is hydrolysed. In this embodiment the milk derivative is the milk-related feed which has been modified by hydrolysing at least some of the lactose. The milk derivative is subjected to a HT-treatment, and the resulting HT-treated milk derivative is subsequently packaged. In this embodiment the milk-related product is, or essentially consists of, the HT-treated milk derivative.

Figure 3 shows a schematic flow diagram of an embodiment not according to the invention in which the milk-related feed is subjected to a HT-treatment. In this embodiment the milk derivative is, or essentially consists of, the milk-related feed. Subsequently, at least some of the lactose of the HT-treated milk derivative is hydrolysed. In this embodiment the milk-related product is, or essentially consists of, the HT-treated milk derivative, which contains the hydrolysed lactose. After the hydrolysis the milk-related product is finally packaged.

Figure 4 shows a schematic flow diagram of an embodiment not according to the invention in which the milk-related feed is subjected to an enzyme inactivation step. In this embodiment the milk derivative is, or essentially consists of, the enzyme inactivated milk-related feed. The milk derivative is subjected to a HT-treatment and the resulting product is subsequently packaged. In this embodiment the milk-related product is, or essentially consists of, the HT-treated milk derivative.

Figure 5 shows a schematic flow diagram of an embodiment of the invention in which at least some of the lactose of the milk-related feed is hydrolysed and the resulting product is subjected to an enzyme inactivation step. In this embodiment the milk derivative is the hydrolysed, enzyme inactivated milk-related feed. The milk derivative is subsequently subjected to a HT-treatment and packaged. In this embodiment of the invention the milk-related product is, or essentially consists of, the HT-treated milk derivative.

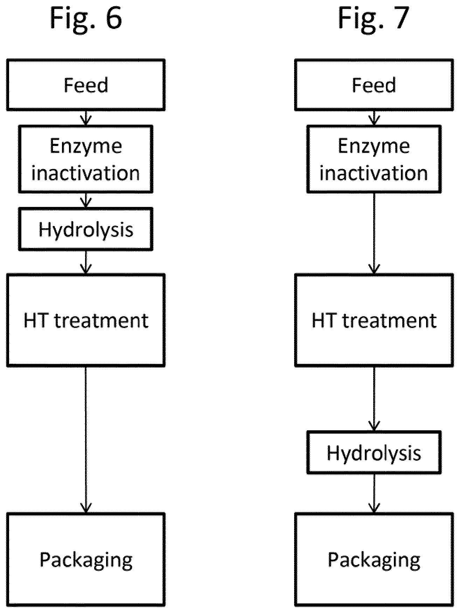

Figure 6 shows a schematic flow diagram of an embodiment of the invention in which the milk-related feed is subjected to an enzyme inactivation step and in which a least some of the lactose of the resulting product is hydrolysed. In this embodiment the milk derivative is the milk-related feed which has been subjected to enzyme inactivation and subsequent hydrolysis of lactose. The milk derivative is subjected to a HT-treatment and finally packaged.

Figure 7 shows a schematic flow diagram of an embodiment of the invention in which the milk-related feed is subjected to an enzyme inactivation step and subsequently to a HT-treatment. The milk derivative of this embodiment is, or essentially consists of, the enzyme inactivated milk-related feed. After the HT-treatment at least some of the lactose of the HT-treated milk derivative is hydrolysed, and the resulting milk-related product, now also containing hydrolysis products of lactose, is subsequently packaged.

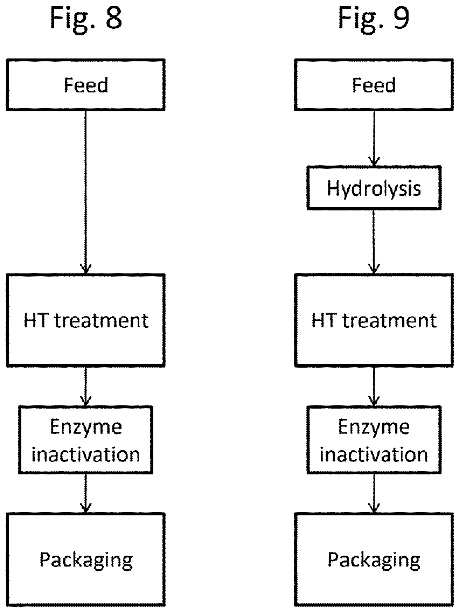

Figure 8 shows a schematic flow diagram of an embodiment not according to the invention in which the milk-related feed is subjected to a HT-treatment. In this embodiment the milk derivative is, or essentially consists of, the milk-related feed. Subsequently, the resulting HT-treated milk derivative is subjected to an enzyme inactivation step and packaged. In this embodiment the milk-related product is, or essentially consists of, the enzyme inactivated HT-treated milk derivative.

Figure 9 shows a schematic flow diagram of an embodiment of the invention in which at least some of the lactose of the milk-related feed is hydrolysed and subsequently subjected to a HT-treatment. In this embodiment the milk derivative is, or essentially consists of, the milk-related feed containing hydrolysed lactose. The resulting HT-treated milk derivative is subjected to an enzyme inactivation step and packaged. Thus, the milk-related product of this embodiment is, or essentially consists of, the enzyme inactivated, HT-treated milk derivative.

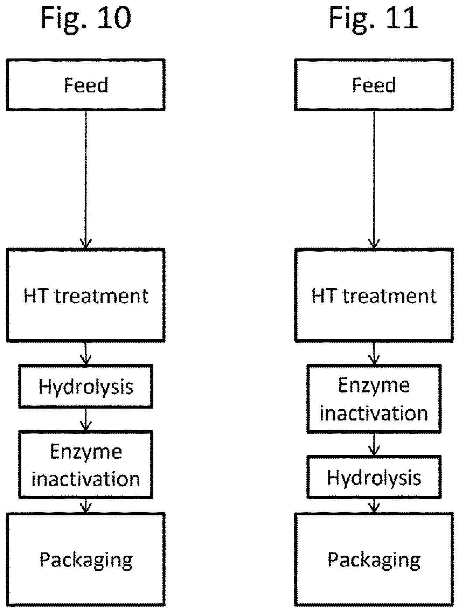

Figure 10 shows a schematic flow diagram of an embodiment of the invention in which the milk-related feed is subjected to a HT-treatment. In this embodiment the milk derivative is, or essentially consists of, the milk-related feed. Subsequently, the resulting HT-treated milk derivative is first subjected to a step of hydrolysing at least some of the lactose of the HT-treated milk derivative, then to an enzyme inactivation step, and finally packaged. The milk-related product of this embodiment is, or essentially consists of, the hydrolysed, enzyme inactivated HT-treated milk derivative.

Figure 11 shows a schematic flow diagram of an embodiment of the invention in which the milk-related feed is subjected to a HT-treatment. In this embodiment the milk derivative is, or essentially consists of, the milk-related feed. Subsequently, the resulting HT-treated milk derivative is first subjected to an enzyme inactivation step, then to a step of hydrolysing at least some of the lactose of the HT-treated milk derivative, and finally the product is packaged. The milk-related product of this embodiment is, or essentially consists of the enzyme inactivated, hydrolysed HT-treated milk derivative.

An advantage of the present invention is that it provides a more CO2-friendly, fresh-tasting milk. Due to its long shelf-life and robustness to higher temperatures, the present milk-related products can be transported at ambient temperature instead of at 5 degrees C. Low temperature logistics are highly energy consuming and typically require transportation of a relatively higher number of small, cooled loads of product, than a comparable ambient temperature logistic set-up. Milk-related products of the present invention may therefore be produced and transported to the retailers with a lower CO2 emission than prior art milk products having a similar fresh taste.

The present inventors have additionally found that the method of the invention surprisingly increases the time a milk processing plant, in which the method has been implemented, can operate before the plant has to be cleaned. This is perceived as advantageous and allows for cost savings in the production of the milk products.

As will be clear to the person skilled in the art, the method may contain one or more additional step(s), such as a homogenisation step, a storage step, a mixing step, temperature adjustment step, a pasteurisation step, a thermization step, a centrifugation step as well as combinations thereof.

Yet an aspect of the invention relates to a packaged, lactose-reduced milk-related product obtainable by the method according to any of the preceding claims. The milk-related product may be packaged in a container as described herein.

An additional aspect of the invention relates to a milk-related product obtainable by the method according to the invention, preferably having a long shelf-life and low level of cooked taste.

The shelf-life of a product is typically described as the time for which the product can be stored without the quality falling below a certain minimum acceptable level. This is not a very sharp and exact definition and it depends to a large extent on the perception of "minimum acceptable quality".

In the context of the present invention, the term "shelf-life" means the time in which the milk-related product can be stored, hermetically sealed, at a specific temperature before an undesirable event occurs.

In an embodiment of the invention, the undesirable event is that the milk-related product is found to be non-sterile. A non-sterile milk-related product is a product which does not contain microorganisms capable of growing in the product at normal non-refrigerated conditions at which the food is likely to be held during manufacture, distribution and storage. Non-sterility and microbial presence or growth may e.g. be detected according to Marth, E. H., ed. 1978. in Standard methods for the examination of dairy products. Am. Publ. Health Assoc., Washington, DC.

Hydrophobic peptides, which are products of proteolytic degradation of milk proteins, are known to give rise to an undesirably bitter taste. Thus, in an embodiment of the invention, the undesirable event is that the milk-related product is found to contain at least 1 mg/L hydrophobic peptides having a molar weight in the range of 500-3000 g/mol, such as at least 20 mg/L, or such as at least 50 mg/L hydrophobic peptides having a molar weight in the range of 500-3000 g/mol.

In another embodiment of the invention, the undesirable event is that the milk-related product is found to contain at least 100 mg/L hydrophobic peptides having a molar weight in the range of 500-3000 g/mol, such as at least 200 mg/L, or such as at least 500 mg/L hydrophobic peptides having a molar weight in the range of 500-3000 g/mol.

In a further embodiment of the invention, the undesirable event is that the milk-related product is found to contain at least 750 mg/L hydrophobic peptides having a molar weight in the range of 500-3000 g/mol, such as at least 1000 mg/L, or such as at least 2000 mg/L hydrophobic peptides having a molar weight in the range of 500-3000 g/mol.

The concentration of hydrophobic peptides having a molar weight in the range of 500-3000 g/mol of the milk-related product is determined as described in Kai-Ping et al, J. Agric. Food Chem. 1996, 44, 1058-1063. The milk-related product is used as sample and, following Kai-Ping et al., the obtained 500-3000 g/mol molecular weight fraction is subsequently analysed via analytical HPLC on a C18 column. The resulting chromatogram is used to determine the concentration of hydrophobic peptides having a molar weight in the range of 500-3000 g/mol of the milk-related product.

In yet an embodiment of the invention, the undesirable event is that the milk-related product is found to have an undesirable sensory property using sensory testing according to ISO 22935-1:2009, ISO 22935-2:2009, and ISO 22935-3:2009 which relate to sensory analysis of milk and milk products. Sensory properties, such as visual appearance, consistency, odour, and taste, are preferably tested.

It is preferred to combine two or more of the different types of undesirable events for the determination of shelf-life.

Thus, in a preferred embodiment of the invention, the shelf-life is determined by the first occurrence of an undesired event selected from the group consisting of:

- the milk-related product is found to be non-sterile, and
- the milk-related product is found to contain at least 1 mg/L hydrophobic peptides having a molar weight in the range of 500-3000 g/mol.

In another preferred embodiment of the invention, the shelf-life is determined by the first occurrence of an undesired event selected from the group consisting of:

- the milk-related product is found to be non-sterile,
- the milk-related product is found to contain at least 1 mg/L hydrophobic peptides having a molar weight in the range of 500-3000 g/mol, and
- the milk-related product is found to have an undesirable sensory property.

In yet a preferred embodiment of the invention, the shelf-life is determined by the first occurrence of an undesired event selected from the group consisting of:

- the milk-related product is found to be non-sterile, and
- the milk-related product is found to have an undesirable sensory property.

In an embodiment of the invention, the shelf-life of said milk-related product is at least 30 days, when kept at 25 degrees C.

In another embodiment of the invention, the shelf-life of said milk-related product is at least 49 days, when kept at 25 degrees C the first 21 days after packaging and at 5 degrees C the subsequent time.

In yet an embodiment of the invention, the shelf-life of said milk-related product is at least 70 days, when kept at 5 degrees C.

In an additional embodiment of the invention, the shelf-life of said milk-related product is at least 119 days, when kept at 25 degrees C.

In another embodiment of the invention, the shelf-life of said milk-related product is at least 182 days, when kept at 25 degrees C.

The milk-related product of the invention appears to have a relatively low content of denatured beta-lactoglobulin. For example, at most 50% (w/w) of the beta-lactoglobulin of the milk-related product may be denatured relative to the total amount of both denatured and non-denatured beta-lactoglobulin. Preferably, at most 40% (w/w) of the beta-lactoglobulin of the milk-related product is denatured relative to the total amount of both denatured and non-denatured beta-lactoglobulin, preferably at most 35% (w/w), and even more preferably at most 30% (w/w).

In preferred embodiments of the invention, at most 30% (w/w) of the beta-lactoglobulin of the milk-related product is denatured relative to the total amount of both denatured and non-denatured beta-lactoglobulin, preferably at most 25% (w/w), and even more preferably at most 20% (w/w

The degree of denaturation is measured according to Analysis C of Example I.

In an embodiment of the invention, the milk-related product comprises at most 60% w/w milk fat. An example of such a milk-related product is cream double.

In another embodiment of the invention, the milk-related product comprises at most 40% w/w milk fat. An example of such a milk-related product is whipping cream.

In yet an embodiment of the invention, the milk-related product comprises at most 20% w/w milk fat. An example of such a milk-related product is table cream containing 18% w/w milk fat.

In a further embodiment of the invention, the milk-related product comprises at most 4% w/w milk fat. An example of such a milk-related product is full fat milk which typically contains 2-4% w/w milk fat, and preferably approx. 3% w/w milk fat.

In a further embodiment of the invention, the milk-related product comprises at most 1.5 w/w milk fat. An example of such a milk-related product is semi-skim milk which typically contains 0.7-2% w/w milk fat, and preferably 1-1.5% w/w milk fat.

In an additional embodiment of the invention, the milk-related product comprises at most 0.7 w/w milk fat. An example of such a milk-related product is skim milk which normally contains 0.1-0.7% w/w milk fat, and preferably 0.3-0.6% w/w milk fat, such as approx. 0.5% w/w milk fat.

In a preferred embodiment of the invention, the milk-related product comprises at most 0.1% w/w milk fat. An example of such a milk-related product is skim-milk having a fat content in the range of 0.05-0.1% w/w.

In some embodiments of the invention, the milk-related product comprises 2.5-4.5% w/w casein, 0.25-1% w/w milk serum protein, and 0.01-3% w/w milk fat. In some preferred embodiments of the invention, the milk-related product comprises 2.5-4.5% w/w casein, 0.25-1% w/w milk serum protein, and 0.1-1.5% w/w milk fat. In other preferred embodiments of the invention, the milk-related product comprises 2.5-4.5% w/w casein, 0.25-1% w/w milk serum protein, and 0.01-0.1% w/w milk fat.

The milk-related product normally comprises water, and may e.g. comprise at least 60% (w/w) water, preferably at least 70% (w/w) water, and even more preferably at least 80% (w/w) water. For example, the milk-related product may comprise at least 85% (w/w) water, preferably at least 87.5% (w/w) water, and even more preferably at least 90% (w/w) water.

In some embodiments of the invention the lactose-reduced milk-related product comprises at most 3% (w/w) lactose relative to the total weight of the lactose-reduced milk-related product. For example, the lactose-reduced milk-related product may comprise at most 2% (w/w) lactose relative to the total weight of the lactose-reduced milk-related product, preferably at most 1% (w/w), and even more preferably at most 0.5% (w/w) lactose relative to the total weight of the lactose-reduced milk-related product.

Even lower levels of lactose may be desirable, thus in some embodiments of the invention the lactose-reduced milk-related product comprises at most 0.2% (w/w) lactose relative to the total weight of the lactose-reduced milk-related product. For example, the lactose-reduced milk-related product may comprise at most 0.1% (w/w) lactose relative to the total weight of the lactose-reduced milk-related product, preferably at most 0.05% (w/w), and even more preferably at most 0.01% (w/w) lactose relative to the total weight of the lactose-reduced milk-related product.

In some embodiments of the invention the lactose-reduced milk-related product comprises 0.01-2% (w/w) glucose relative to the total weight of the lactose-reduced milk-related product. For example, the lactose-reduced milk-related product may comprise 0.02-1.5% (w/w) glucose relative to the total weight of the lactose-reduced milk-related product, preferably 0.05-1% (w/w), and even more preferably 0.1-0.5% (w/w) glucose relative to the total weight of the lactose-reduced milk-related product.

Sometimes lower levels of glucose may be desirable, thus in some embodiments of the invention the lactose-reduced milk-related product comprises 0.01-0.5% (w/w) glucose relative to the total weight of the lactose-reduced milk-related product. For example, the lactose-reduced milk-related product may comprise 0.02-0.3% (w/w) glucose relative to the total weight of the lactose-reduced milk-related product, preferably 0.04-0.2% (w/w), and even more preferably 0.05-0.1% (w/w) glucose relative to the total weight of the lactose-reduced milk-related product.

In some embodiments of the invention the lactose-reduced milk-related product comprises 0.01-2% (w/w) galactose relative to the total weight of the lactose-reduced milk-related product. For example, the lactose-reduced milk-related product may comprise 0.02-1.5% (w/w) galactose relative to the total weight of the lactose-reduced milk-related product, preferably 0.05-1% (w/w), and even more preferably 0.1-0.5% (w/w) galactose relative to the total weight of the lactose-reduced milk-related product.

Lower levels of galactose may be desirable, thus in some embodiments of the invention the lactose-reduced milk-related product comprises 0.01-0.5% (w/w) galactose relative to the total weight of the lactose-reduced milk-related product. For example, the lactose-reduced milk-related product may comprise 0.02-0.3% (w/w) galactose relative to the total weight of the lactose-reduced milk-related product, preferably 0.04-0.2% (w/w), and even more preferably 0.05-0.1% (w/w) galactose relative to the total weight of the lactose-reduced milk-related product.

The milk-related product may furthermore contain any of the additives mentioned herein.

In one exemplary aspect, the milk-related product may have a shelf-life in the range of 4 to 6 months, when stored at a temperature of no more than 35 degrees C.

In a second exemplary aspect, the milk-related product may have a shelf-life in the range of 20 days to 60 days when stored at a temperature of no more than 8 degrees C.

Milk secreted by healthy cows is basically sterile, but the introduction of bacteria into milk from a variety of sources, including exterior and interior of the udder, soil, bedding, manure, milking equipment and storage tanks, is generally unavoidable. Although, according to Pasteurized Milk Ordinance (PMO) standards, the total bacterial count (TBC) of Grade A raw milk for an individual producer should not exceed 100,000 cfu/mL (FDA, 2001, Grade "A" Pasteurized Milk Ordinance., U.S. Dept. of Health and Human Services, Public Health Service. Publication No. 229. Washington, DC.), an ideal specification for the bacterial count is < 7500. Following pasteurisation, the recommended bacterial count should not exceed 20,000 cfu/ml. After UHT processing, e.g. at 149 degrees C for 3 seconds, no microorganism/spore is capable of survival, as measured by standard plate count tests (Gillis et al., J Dairy Sci.1985 2875-9).

The long shelf-life of the milk-related product of the present invention is due to low residual level of viable microorganisms. When measured immediately following processing and packaging (under aseptic conditions) the product has a viable spore count, measured as colony forming units/millilitre (cfu/ml) of at most 1,000 cfu/ml, more preferably 500 cfu/ml, 100 cfu/ml, 50 cfu/ml, 10 cfu/ml, 1 cfu/ml or <1 cfu/ml. Preferably the product has a viable spore count between 0 and 1,000 cfu/ml, more preferably between 0 and 100 cfu/ml, 0 and 50 cfu/ml, or 0 and 10 cfu/ml.

In a preferred embodiment of the invention, the milk-related product contains 0 cfu/ml, i.e. the milk-related product is preferably sterile.

Suitable methods for determining the viable spore count in milk or milk-derived products are known in the art: For example standard plate count tests are described by Marth, E. H., ed. 1978. in Standard methods for the examination of dairy products. Am. Publ. Health Assoc., Washington, DC. According to a standard method, milk samples are plated on a medium of Milk Agar (Oxoic), and colonies are counted after 3 d incubation at 30 degrees C (Health protection agency (2004) Plate count test at 30 degrees C. National Standard Method D2 IISue 3, www.hpa-standardmethods.org.uk/pdf sops.asp. Alternatively, spore counts can be determined by direct microscopic count using bright-field microscopy and Thoma counting chamber procedures.

Many volatile compounds generated during the thermal processing of milk have been associated with cooked, stale, and sulfurous notes in milk and are considered as off-flavours by most consumers. Heat treatment is known to be the direct cause of Type 2 reactions leading to off-flavour compounds, such as aldehydes, methyl ketones, and various sulfur compounds, which are barely detectable in the raw milk.

Levels of total ketones detected in raw milk (circa 6 microgram and 11 microgram total ketones per kg of 1% and 3% raw milk respectively) and pasteurised milk are not significantly different, but may be increased by as much as 12 fold in UHT milk (circa 78 microgram and 120 microgram total ketones per kg of 1% and 3% UHT milk respectively). The major ketone contributors are 2-heptanone and 2-nonanone, whose concentration is 34 and 52 times higher, respectively, in UHT milk than in raw and pasteurized samples. These levels correspond to circa 22 microgram and 34 microgram 2-heptanone per kg of 1% and 3% UHT milk respectively; and circa 35 microgram and 53 microgram 2-nonanone per kg of 1% and 3% UHT milk respectively). The other contributors are 2,3-butanedione, 2-pentanone, and 2-undecanone.

Since aroma impact is not only dependent on concentration, but also on sensory threshold, the odour activity value (OAV = concentration/sensory threshold) must be taken into account. The calculated odour activity values reveal that 2,3-butanedione, 2-heptanone, 2-nonanone, 2-methylpropanal, 3-methylbutanal, nonanal, decanal, and dimethyl sulfide are important contributors to the off-flavour of UHT milk.

In some exemplary embodiments of the invention, the natural organoleptic properties of raw/pasteurised milk are preserved in the long shelf-life milk-related product of the present invention due to the low level of volatile off-flavor compounds in the product. In particular the milk product obtained immediately following processing and packaging (under aseptic conditions) contains a detectable total ketone level measured in units of microgram total ketone per kg of 1% fat (or 3% fat) milk of at most 60 (100), more preferably at most 50 (80), 40 (60), 30 (40), 20 (20) and 10 (10) microgram total ketone. Preferably, the detectable total ketone level measured in units of microgram total ketone per kg of 1% fat (or 3% fat) milk lies within the range of between 6 - 60 (8 - 100), more preferably 6 - 50 (8 - 80), 6 - 40 (8 - 60), 6 - 30 (8 - 40), 6 -20 (8 - 20) or 6 -10 (8 - 10) microgram total ketone.

In some exemplary embodiments of the invention, the milk product obtained immediately following processing and packaging (under aseptic conditions) contains a detectable 2-heptanone level measured in units of microgram total 2-heptanone per kg of 1% fat (or 3% fat) milk of at most 15 (25), more preferably at most 10 (20), 7 (15), 5 (10) or 2 (5) microgram 2-heptanone. Preferably, the detectable 2-heptanone level measured in units of microgram total ketone per kg of 1% fat (or 3% fat) milk lies within the range of between 1 - 15 (1 - 25), more preferably 1 - 10 (1 - 20), 1 - 7 (1 - 15), 1 - 5 (1 - 10) or 1 -3 (1 - 5) microgram 2-heptanone.

In some exemplary embodiments of the invention, the milk product obtained immediately following processing and packaging (under aseptic conditions) contains a detectable 2-nonanone level measured in units of microgram total 2-nonanone per kg of 1% fat (or 3% fat) milk of at most 25 (40), more preferably at most 20 (30), 15 (25), 10 (15) or 5 (10) microgram 2-nonanone. Preferably, the detectable 2-nonanone level measured in units of microgram 2-nonanone per kg of 1% fat (or 3% fat) milk lies within the range of between 0.2 - 25 (0.2 - 40), more preferably 0.2 - 20 (0.2 - 30), 0.2 - 15 (0.2 - 25), 0.2 - 10 (0.2 - 15) or 0.2 -5 (0.2 - 10) microgram 2-nonanone.

Headspace solid-phase microextraction (HSSPME) combined with gas chromatography provides a fast and reliable technique for the extraction and quantitative analysis of volatile components in dairy foods (P. A. Vazquez-Landaverde et al., 2005 J. Dairy Sci. 88:3764-3772). For example, mass spectra of milk volatiles can be obtained using an Agilent 6890 gas chromatograph equipped with a 5973 quadrupole mass analyzer detector (Agilent Technologies, Inc., Wilmington, DE). The SPME fiber is exposed to the headspace of 20 g of a milk sample in a 40-mL amber glass vial for 3 h at 35 degrees C and then inserted in the GC-mass spectroscopy injection port for 5 min. under splitless conditions. A DB-5 capillary column (30 m × 0.32 mm i.d., 1-microm film thickness; J&W Scientific, Folsom, CA) provides chromatographic separation. The oven temperature program is maintained at 35 degrees C for 8 min., increased to 150 degrees C at a rate of 4 degrees C /min., then increased to 230 degrees C at a rate of 20 degrees C/min., and finally held at 230 degrees C for 20 min. Helium is used as the carrier gas at 2.5 mL/min. The injector, detector transfer line, and ion source temperatures are 250, 280, and 230 degrees C, respectively. Electron impact ionization at a voltage of 70 eV and m/z range of 35 to 350 is collected at 4.51 scans/s. The instrument control and data analysis is performed using enhanced ChemStation software (Agilent Technologies, Inc.). The volatile compounds in milk are identified by comparing mass spectra and retention times with those of authentic compounds.

Heat treatment of milk is the cause of Type 1 reactions leading to the denaturation, degradation, and inactivation of whey proteins, enzymes, and vitamins. The Maillard reaction plays a key role in such Type 1 reactions. This reaction can be monitored by measuring the furosine (epsilon-N-2-furoylmethyl-L-lysine) and lactulose (4-0-beta-galactopyranosyl-D-fructose) values and the furosine/lactulose ratio in a product. In the early Maillard reaction, lactose reacts with protein-bound lysine to the protein-bound Amadori product (1-deoxy-1-amino-) lactulosyllysine. Furosine is an artificial amino acid that arises from acid hydrolysis of the Amadori product. Furosine can therefore be used as a molecular marker to quantify the extent (and progress) of the Maillard reaction and available lysine. Furosine as such is normally not present in detectable levels in milk products.

Similarly, the milk product obtained immediately following processing and packaging (under aseptic conditions) contains a detectable level of lactulose measured in units of mg/milliliter (ml) milk of at most 30 mg/ml milk product, more preferably at most 20, 10, 5, or 2 mg/ml. Preferably, the detectable lactulose level measured in units of mg lactulose per ml of milk product lies within the range of between 0 - 30 mg/ml, more preferably 0 - 20, 0 - 10, 0 - 5 or 0 - 2 mg/ml lactulose.

In some preferred embodiments of the invention, the milk-related product has a furosine value of at most 80 mg/100 g protein on day 49 after the production when kept at a temperature of 25 degrees C during storage. The furosine value of a milk-related product may be determined according to Analysis F of Example I.

For example, the milk-related product may have a furosine value of at most 70 mg/100 g protein on day 49 after the production when kept at a temperature of 25 degrees C during storage or even more preferred a furosine value of at most 60 mg/100 g protein on day 49 after the production when kept at a temperature of 25 degrees C during storage.

Even lower furosine values may be preferred, thus the milk-related product may have a furosine value of at most 50 mg/100 g protein on day 49 after the production when kept at a temperature of 25 degrees C during storage. For example, the milk-related product may have a furosine value of at most 40 mg/100 g protein on day 49 after the production when kept at a temperature of 25 degrees C during storage or even more preferred a furosine value of at most 30 mg/100 g protein on day 49 after the production when kept at a temperature of 25 degrees C during storage.

In other preferred embodiments of the invention, the milk-related product has a furosine value of at most 60 mg/100 g protein on day 49 after the production when kept at a temperature of 5 degrees C during storage.

For example, the milk-related product may have a furosine value of at most 50 mg/100 g protein on day 49 after the production when kept at a temperature of 5 degrees C during storage or even more preferred a furosine value of at most 40 mg/100 g protein on day 49 after the production when kept at a temperature of 5 degrees C during storage.

Even lower furosine values may be preferred, thus the milk-related product may have a furosine value of at most 30 mg/100 g protein on day 49 after the production when kept at a temperature of 5 degrees C during storage. For example, the milk-related product may have a furosine value of at most 20 mg/100 g protein on day 49 after the production when kept at a temperature of 5 degrees C during storage or even more preferred a furosine value of at most 10 mg/100 g protein on day 49 after the production when kept at a temperature of 5 degrees C during storage.

As mentioned, the formation of the Amadori product in the Maillard reaction leads to a loss of lysine available for digestion. Therefore, the nutritional value of the present milk-related products is perceived to be better than prior art lactose-reduced milk due to the lower furosine values and thus higher bioavailability of lysine.

Although fat-soluble vitamins in milk are minimally affected by heat treatment, the water-soluble vitamins can be partially destroyed. Consequently, UHT processing reduces B vitamins by 10%, folic acid by 15%, and vitamin C by 25%.

The long shelf-like milk of some exemplary embodiments of the present invention has a vitamin C content that is reduced by less than 20% during production processing.

Hydroxymethylfurfural (HMF) is a recognised marker of heat-damaged milk, where levels of HMF in UHT milk are reported to range from 4 - 16 micromol/l. Singh et al., Lait (1989) 69 (2) 131-136. A long shelf-life milk-related product obtained immediately following processing and packaging (under aseptic conditions) contains a detectable level of HMF measured in units of 1 micromol /L milk at most 6 micromol/l HMF, more preferably at most 5, 4, 3, 2 or 1 micromol/L HMF. Preferably, the detectable HMF level measured in units of micromol HMF per l of milk product lies within the range of between 0 - 6 micromol/l, more preferably 0 - 5, 0 - 4, 0 - 3 or 0 - 2 micromol/l.

Methods for determining furosine and lactulose levels in milk or milk-derived products are known in the art: Both HPLC or enzymatic assays, as well as front-face fluorescence spectroscopy methods are described by Kulmyrzaev et al., 2002 in Lait 82: 725-735. Methods for determining HMF levels in milk are described by Singh et al., Lait (1989) 69 (2) 131-136.

The milk-related product can additionally be characterised using one or more of the analysis described in Example I.

The milk related product may for example be a lactose-reduced milk-related product having a shelf-life of at least 119 days, when kept at 25 degrees C, said lactose-reduced milk-related product comprising:

- 0.01-2% (w/w) galactose relative to the total weight of the lactose-reduced milk-related product,
- 0.01-2% (w/w) glucose relative to the total weight of the lactose-reduced milk-related product,
- at most 0.2% (w/w) lactose relative to the total weight of the lactose-reduced milk-related product, and

wherein the milk-related product has a furosine value of at most 80 mg/100 g protein on day 49 after the production when kept at a temperature of 25 degrees C during storage.

In a preferred embodiment of the invention, the lactose-reduced milk-related product has a shelf-life of at least 182 days, when kept at 25 degrees C.

The lactose-reduced milk-related product may have a furosine value of at most 60 mg/100 g protein on day 49 after the production when kept at a temperature of 25 degrees C during storage.

Alternatively, the milk-related product may be a lactose-reduced milk-related product having a shelf-life of at least 70 days, when kept at 5 degrees C, said lactose-reduced milk-related product comprising:

- 0.01-2% (w/w) galactose relative to the total weight of the lactose-reduced milk-related product,
- 0.01-2% (w/w) glucose relative to the total weight of the lactose-reduced milk-related product,
- at most 0.2% (w/w) lactose relative to the total weight of the lactose-reduced milk-related product, and

wherein the milk-related product has a furosine value of at most 60 mg/100 g protein on day 49 after the production when kept at a temperature of 5 degrees C during storage.

The lactose-reduced milk-related product may for example have a furosine value of at most 50 mg/100 g protein on day 49 after the production when kept at a temperature of 5 degrees C during storage.

Disclosed herein is also a milk processing plant for converting a milk-related feed to a milk-related product having a long shelf-life, said plant comprising

- a lactose reduction section adapted to remove lactose from a milk, thereby providing a milk-related feed,

- a HT-treatment section in fluid communication with said lactose reduction section, which HT-treatment section is adapted to heat a milk-derivative derived from said milk-related feed to a temperature in the range of 140-180 degrees C for a period of at most 200 msec. and subsequently cool the liquid product, and

- a packaging section in fluid communication with the HT-treatment section for packaging the product of the milk processing plant.

In the context of the present invention, the term "fluid communication" means that the sections which are in fluid communication are so arranged that that liquid can be moved from one section to the other. This is typically implemented by interconnecting the relevant sections of the plant with pipes, and pumps and/or valves.

The milk processing plant is suitable for implementing the method of the present invention.

The lactose reduction section typically contains one or more systems adapted to physically removing lactose from a milk-related feed. For example, the lactose reduction section may comprise series of ultrafiltration systems and nanofiltration systems as depicted in Fig. 12 or Fig. 13.

The HT-treatment section may comprise one or more of the HT treatment systems mentioned herein and the packaging section will typically contain a commercially available packaging or filling system.

The packaging section is preferably an aseptic filling system.

In addition to the above-mentioned sections, the milk processing plant may contain pumps, valves, piping, homogeniser, heater, etc. which all are well-known units for the person skilled in the art and are commercially available as well.

The plant furthermore contains an enzyme inactivation section adapted to heat a liquid to a temperature as described herein in the context of the enzyme activation step. The enzyme inactivation section may for example comprise one or more plate heat exchanger(s).

The plant furthermore contains a lactose hydrolysis section adapted to hydrolyse lactose in a liquid at a temperature as described herein in the context of the hydrolysis. The lactose hydrolysis section may for example comprise a temperature controlled tank or a continuous flow enzyme reactor.

The plant may furthermore comprise a physical separation section capable of removing microorganisms from the milk-related feed. The physical separation section may e.g. contain one or more of the microfiltration systems mentioned herein, and alternatively or in addition, it may contain one or more of the bactofuges mentioned herein.

**EXAMPLES**

**Example I** - **Methods of analysis**

Analysis A: Sensory testing

A sensory profile or QDA, Quantitative Descriptive Analysis, is a description of the sensory properties of a product as well as the intensity of properties. It is an established method that contains a list of attributes, normally in the order that they are perceived, and an intensity value for each attribute. Sensory profiling is described in ISO 13299:2003 and in ISO 22935-1:2009, ISO 22935-2:2009, and ISO 22935-3:200 which relate to Sensory analysis of milk and milk products.

Sample/quality of sample:

To be able to conduct the test there must be samples for training available before the test. For the actual test there must be a sufficient amount of each sample. They should also be of representative quality.

The numbers of samples that can be evaluated during one session depend on the nature of the sample and the amount of attributes to be evaluated. If only a few attributes are to be evaluated, more samples can be included in the test, and vice versa. Normally a maximum of ten samples are evaluated in one session.

Panel leader:

The panel leader is responsible for training the panel and the design and performance of the test. The requirements of a panel leader is described in ISO 13300-1:2006

Assessors:

The assessors in the panel are chosen because of their ability to detect flavours at low concentration. The recruitment process is described in ISO 8586-1:1993. They are trained for a certain type of products, in this case milk. Before a sensory profile test the panel trains several times with the products and attributes that are to be tested. The aim of the training is to obtain a uniform way of using the scale and understanding the meaning of the scale.

For each test a panel of 6-12 assessors is used to evaluate the products.

Evaluation room:

The room where the training and the test are performed should meet the requirements stated in ISO 8589:2007.

Presentation of samples:

The samples should be served blind with a three-digit code, the serving order randomized. Samples are served in small plastic pots with lid on ("Aseptisk provburk" 100 ml from www.kemikalia.se art. No. 165555).

Scale and training session:

A continuous linear scale with anchored end points is used. The end points are described as "nothing at all" of the attribute = 0, respectively "very, very strong" intensity of the attribute =10. The task for each assessor is to mark the scale to indicate the intensity of each attribute. For boiled/cooked flavour the panel has agreed that low pasteurized milk (72 degrees C/15 sec, 1.5 % fat) has the value 0, extended shelf-life (ESL) milk (Direct steam injection 127 degrees C/2 sec, 1.5% fat) 2.5 and UHT (Direct steam injection 143 degrees C/6 sec, 1.5% fat) 7,5 on the scale. The numbers are not shown to the assessors during the test.

During the training period the assessors will learn about how to identify the attributes and how to evaluate them, by look, smell, taste etc. They will also establish a common way of evaluating each attribute, e.g. boiled flavour for ESL milk is 2.5 on the scale. One or more individual evaluation is also done during the training period to evaluate each assessor's ability to perform the test.

The test:

Each session starts with training/review of the panel. Three known samples are used first; low pasteurized milk (72 degrees C/15 sec, 1.5 % fat), long shelf-life milk (Direct steam injection 127 degrees C/2 sec, 1.5 % fat) and UHT (Direct steam injection 143 degrees C/6 sec, 1.5 % fat), which all have specific positions on the scale. After that, the panel receives one or two unknown samples, which they through consensus decide where to put on the scale (calibration of panel).

The panel should be informed about the number of samples to evaluate and any other information that might be necessary. FIZZ Software is used for the evaluation. During the test one sample at a time is served to the assessors. The task for the panel is then to look/feel/smell/taste the product and the put a mark on the scale for each attribute. It is also possible for the assessor to write a comment on each sample. They should rinse the mouth with water between attributes and samples.

References for Analysis A:

ISO 22935-1:2009, ISO 22935-2:2009, and ISO 22935-3:2009 which relate to sensory analysis of milk and milk products.

ISO 13299:2003 Sensory analysis -- Methodology -- General guidance for establishing a sensory profile

ISO 13300-1:2006 Sensory analysis -- General guidance for the staff of a sensory evaluation laboratory -- Part 1: Staff responsibilities

ISO 8586-1:1993 Sensory analysis -- General guidance for the selection, training and monitoring of assessors -- Part 1: Selected assessors

ISO 8589:2007 Sensory analysis -- General guidance for the design of test rooms

Stone, H and Sidel, J.L (2004) Sensory Evaluation Practices. Tragon Corporation, California, ISBN0-12-672690-6

Analysis B - Particle size distribution:

Particle size in a milk sample is determined using a Malvern apparatus running a Mastersizer 2000 program where average particle diameter is measured in terms of mean diameter (micrometer) by volume.

Analysis C: Denatured beta-lactoglobulin

The determination of the degree of denaturation of beta-lactoglobulin of a processed milk product requires a sample of the unprocessed milk derivative and a sample of the processed milk product. Each sample is analysed according to ISO 13875:2005(E) "Liquid milk - Determination of acid-soluble beta-lactoglobulin content" to determine the amount of acid soluble beta-lactoglobulin in the samples - expressed in the unit mg/L sample.

The degree of denaturation (DD) of beta-lactoglobulin of the milk product is calculated via the formula:

$$DD = 100\%*(BLGr - BLGh)/BLGr$$

Wherein:

DD is the degree of denaturation (DD) of beta-lactoglobulin.
BLGr is the content of beta-lactoglobulin in the untreated milk derivative (mg/L).
BLGh is the content of beta-lactoglobulin in the processed milk product to which the degree of denaturation relates (mg/L).

Analysis D: Lactulose determination:

Lactulose content in a milk sample is measured by an enzymatic assay, defined by the International Organisation for Standards, given publication No: ISO 11285:2004(E); IDF 175: 2004 (E).

Analysis E: Hydroxy Methyl Furfural (HMF) Quantification by HPLC

The content of HMF, as well as the content of HMF and its precursors, in a milk sample is measured in parallel, together with a set of HMF standards, according to the following protocol:
HMF standards: 1 to 60 microM Hydroxy Methyl Furfural (HMF) aqueous solutions are prepared from 0.5 mM and 1.2 mM HMF standard aqueous solutions in milli Q water.

Preparation of milk samples to be analysed: A 9% (weight/volume) aqueous solution is prepared from a milk sample and the solution is then stirred for at least 1 hour. A 10 ml sample is taken from this solution, which is then transferred to a 50 ml flask, to which 5 ml 0.15 M oxalic acid is then added to give "Milk HMF sample".

Sample Pre-treatment: Quantification of HMF, and HMF and its precursors respectively in a "Milk HMF sample" are analysed separately, where the samples receive the following pre-treatment:

1) A "Milk HMF sample" is left for 60 min. at room temperature prior to quantifying the content of HMF in the sample "as is";
2) A "Milk HMF sample" is cooked for 60 min. under lid to convert HMF precursors into HMF, followed by cooling to 5 degrees C, prior to quantifying the content of HMF including precursors in the sample.

After cooling the samples, 5 ml 40% TCA (trichloracetic acid) is added to each of the above pre-treated samples, as well as to each HMF standard and blank control sample, which each are then individually filtered through 0.22 micrometer filters, and the filtrate is then subjected to HPLC analysis as follows.

Samples (20 microL volume) are injected into an HPLC, equipped with an Apex II ODS 5micrometer (vydac), and separated with a mobile phase comprising:
Eluent A: H2O, 0.1% TFA; and Eluent B: 90% acetonitrile, 10% H2O and 0.1% TFA in the following gradient:

| Time [min] | Flow [ml/min] | %A | %B | Curve |
|---|---|---|---|---|
| 0,01 | 1,00 | 100,0 | 0,0 | 6 |
| 2,00 | 1,00 | 100,0 | 0,0 | 6 |
| 10,00 | 1,00 | 93,0 | 7,0 | 6 |
| 11,00 | 1,00 | 100,0 | 0,0 | 6 |
| 15,00 | 1,00 | 100,0 | 0,0 | 6 |
| 16,00 | 0,00 | 100,0 | 0,0 | 6 |

HMF, is detected at 284 nm, and the HMF peak area for each sample chromatogram is determined, together with the peak areas of the HMF standards that are used to calculate the slope of the calibration curve, which is forced through 0.0.
HMF in a sample is calculated as follows:

$$HMF\ [microgram/100g] = (Samplepeakarea* MW_{HMF}* V_{Dissolvement})/(Slope* m_{Sample})$$

Where :

Samplepeakarea = Peak area of HMF in the sample chromatogram

Slope = The slope of the calibration curve

$m_{Sample}$ = The weighed sample amount [g]

$V_{Dissolvement}$ = Total volume dissolvement, (10 ml.)

$MW_{HMF}$ = 126.1 g/mol

Analysis F - Determination of the furosine-value:

The milk sample is hydrolysed over-night in HCl solution at 105 degrees C; and one aliquot of the hydrolyzate was used to determine the total Nitrogen content; and another aliquot was passed through a C18 column to separate out the furosine, which was then determined by HPLC-DAD and quantitated with respect to a furosine standard.

Analysis G - Plasmin/plasminogen determination:

Plasmin activity in milk samples and plasmin-derived activity after activation of plasminogen by urokinase were determined by measuring the concentration of the fluorescent product AMC (7-amido-4-methyl coumarin) released by plasmin from the specific non-fluorescent coumarin peptide N-succinyl-L-alanyl-L-phenylalanyl-L-lysyl-7-amido-4-methyl coumarin [1].

Plasmin and plasminogen assays were carried out as previously described by Saint Denis et al. [2]. One millilitre of milk sample was pre-incubated for 10 min. at 37 degrees C with 1 mL of 100 mmol/L Tris-HCl buffer, pH 8.0, containing 8 mmol/L EACA and 0.4 mol/L NaCl to dissociate plasmin from casein micelles.

Plasminogen was previously converted into active plasmin [3, 4, 5] by a 60 min. incubation at 37 degrees C of 1 mL milk sample in the presence of 1 mL urokinase solution (200 Ploug U/mL in 100 mmol/L Tris-HCl buffer, pH 8.0, with 8 mmol/L EACA and 0.4 mol/L NaCl). Incubations were performed at 37 degrees C in a V-bottom microtube.

The incubated reaction mixture consisted of 200 microliter of prepared milk samples mixed with 200 microliter of 2.0 mmol/L N-succinyl-L-alanyl-L-phenylalanyl-L-lysyl-7-amido-4-methyl coumarin (dissolved in 20% v/v dimethyl sulfoxyde and 80% v/v 60 mmol/L Tris-HCl buffer, pH 8.0, with 0.25mol/L NaCl). After 10 min. pre-incubation to stabilize the temperature at 37 degrees C, the rate of peptide hydrolysis was determined by measuring the fluorescence of released AMC during incubation, at 3 time points over an interval of 5 to 90 min, depending on the plasmin or plasmin-derived activity in the sample.

For each measurement, 100 microliter of reaction mixture was mixed in a cuvette with 1 mL of distilled water and 1 mL of Clarifying Reagent (registered trademark) to stop any enzymatic reaction. These steps enabled direct spectrofluorometric measurements (ex = 370 nm, em = 440 nm) without interference of milk turbidity.

Plasminogen content was calculated by subtracting native plasmin activity from the total plasmin activity after plasminogen activation by urokinase. Each sample was analyzed in duplicate. The increase in fluorescence intensity during incubation was linear up to 4 h. A similar reaction mixture without milk sample was used as a control to determine spontaneous hydrolysis of the coumarin peptide, which was negligible in all experiments.

References to Analysis G:

[1] Pierzchala P.A., A new fluorogenic substrate for plasmin, Biochem. J. 183 (1979) 555-559.

[2] Saint-Denis T., Humbert G., Gaillard J.L., Enzymatic assays for native plasmin, plasminogen and plasminogen activators in bovine milk, J. Dairy Res. 68 (2001) 437-449.

[3] Korycka-Dahl M., Ribadeau-Dumas B., Chene N., Martal J., Plasmin activity in milk, J. Dairy Sci. 66 (1983) 704-711.

[4] Richardson B.C., Pearce K.N., The determination of plasmin in dairy products, N. Z. J. Dairy Sci. Technol. 16 (1981) 209-220.

[5] Rollema H.S., Visser S., Poll J.K., Spectrophotometric assay of plasmin and plasminogen in bovine milk, Milchwissenschaft 38 (1983) 214-217.

**Example II: Lactose-reduced and hydrolyzed milk product (hydrolyzed after HT-treatment, ambient storage)**

Low-pasteurized skim milk (72 degrees C for 15 s) was ultrafiltered (UF) at 10 degrees C with a concentration factor of 2 thereby producing a UF permeate containing water, lactose and other small molecules of skimmed milk, and a UF retentate containing the protein fraction of the skimmed milk as well as water and smaller molecules such as lactose. The UF permeate was subsequently nanofiltered (NF) at 10 degrees C with a concentration factor of 4 thereby producing a NF permeate containing water and small ions and a NF retentate containing lactose and water.

UF retentate and NF permeate were combined and mixed at 5 degrees C to obtain a lactose-reduced milk feed. The fat content of the feed was adjusted to approx. 1.5 % (w/w) by addition of high-pasteurized cream.

The feed contained approx. 1.5 % (w/w) milk fat, approx. 4.1 % (w/w) protein and approx. 2.4 % (w/w) lactose. The dry matter content of the feed was approx. 9 % (w/w).

The feed was subjected to an enzyme inactivation step (indirect heating to 85 degrees C for 120 s or 90 degrees C for 120 s) and was subsequently heated to a temperature of 155 degrees C for approx. 0.1 s using steam infusion (Instant Infusion System, Invensys APV, Denmark). The heat-treated feeds were subsequently cooled to $80 \pm 3$ degrees C and homogenized aseptically (2 step 160/40 bar). The products were further cooled to 5 degrees C and sterile filtered lactase (Maxilact LG2000) was added to a concentration of 0.0167 % (w/w) before the milk products were filled aseptically in glass bottles.

The packed milk products was stored dark at ambient temperature for 180 days. After 7 days of storage the lactose content was < 0.01 % (w/w).

This way lactose-reduced milk products were prepared containing 1.5 % (w/w) milk fat, 4.1 % (w/w) protein, < 0.01 % (w/w) lactose and approx. 3 % (w/w) carbohydrates (glucose and galactose). The dry matter content was 9.1-9.2 % (w/w).

Maillard reaction

Nutritional quality and progress of the Maillard reaction in the milk products were measured by monitoring the furosine value during the storage. The furosine values were determined as described in Analysis F of Example I. The obtained results were compared with normal skim milk, lactose-hydrolyzed skim milk and the milk products disclosed in the example 3 and example 4 of the international patent application WO 2009/000972.

The milk products according to example 3 and 4 of WO 2009/000972 were prepared using ultrafiltration and nanofiltration to obtain a milk base with a low lactose content (< 0.5 %) and a lactose fraction. These two fractions were heat treated separately (direct UHT, 146 degrees C for 4 s) and combined afterwards. As the heat treatment of the milk base and lactose fraction is performed separately, furosine formation and Maillard reaction is reported to be reduced.

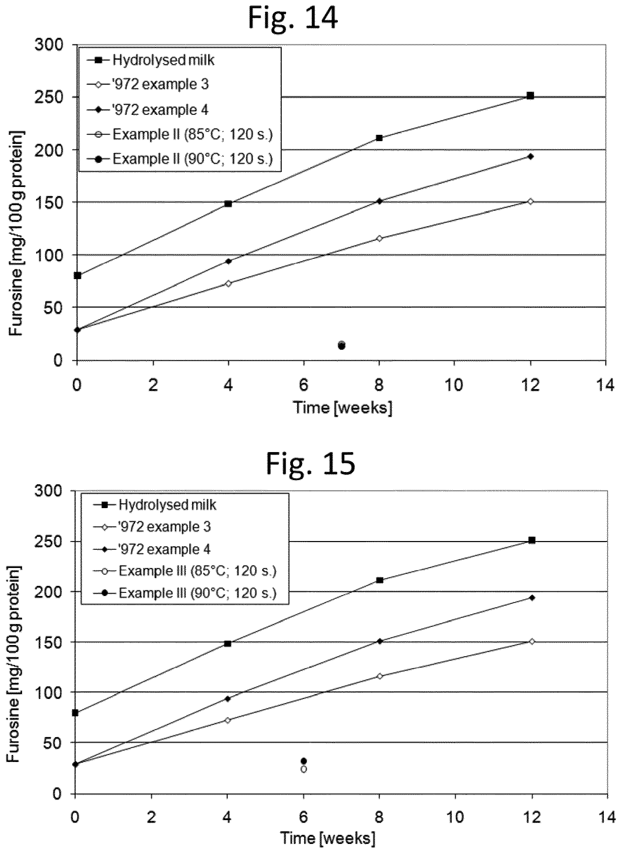

Figure 14 shows the furosine value of Example II milk related products compared to the milk products and reference milk of example 3 and 4 of WO 2009/000972. The milk products produced in Example II had much lower furosine values than comparable prior art milk products, even though carbohydrate and proteins were not heat treated separately.

Determination of the plasmin activity

Proteolytic activity in the present milk products was monitored by analyzing plasmin activity (analysis G).

No proteolysis was observed during storage and the plasmin system was therefore effectively inactivated by the processing described in this Example.

Conclusion

The surprisingly low furosine values of the present milk products demonstrate that the present lactose-reduced milk products are less prone than the lactose-reduced milk of the prior art to having sensory defects related to the Maillard reaction, and particularly to sensory defects which occur during long time storage. The formation of the Amadori product in the Maillard reaction leads to a loss of lysine available for digestion. Therefore, the nutritional value of the milk products of Example II is furthermore perceived to be better than for the prior art lactose-reduced milk due to a higher bioavailability of lysine.

**Example III: Lactose-reduced and hydrolyzed milk product (hydrolyzed before HT-treatment, ambient storage)**

Two other lactose-reduced milk products were produced as outline in Example II, but by performing the hydrolysis of lactose before the heat treatment.

Thus, prior to the heat treatment, the feed was transferred to a tank and Lactase (Maxilact LG2000) was added to a final concentration of 0.175 % (w/w). Lactose hydrolysis was performed at $10 \pm 1$ degrees C for > 20 h to reach a lactose concentration of < 0.01 % (w/w). After this, the lactose-reduced feed was subjected to the same enzyme inactivation step and heat treatment as described in Example II.

The product was filled aseptically in glass bottles and was stored dark at ambient temperature for 180 days.

This way, a carbohydrate-reduced lactose hydrolyzed milk product was prepared containing 1.4 % (w/w) milk fat, 3.7 % (w/w) protein, < 0.01 % (w/w) lactose and approx. 3 % (w/w) carbohydrates. The dry matter content was 8.3-8.4 % (w/w).

Maillard reaction:

Figure 15 shows the furosine value of the present lactose-reduced milk products Furosine formation and Maillard reaction seems to increase when the hydrolysis is performed before the heat treatment. The furosine values of the milk related products of Example III were slightly higher than in the milk related products of Example II, but still significantly lower than the furosine values disclosed in examples 3 and 4 of WO 2009/000972.

Proteolytic activity:

The plasmin system was inactivated in Example III milk related products (< 20 μU/ml) and no proteolysis was observed during storage.

Sensory testing:

The milk related products prepared in Example III both had a consumer acceptable taste at day 180, and appeared to have lower degree of off-flavour than the reference (UHT treated, hydrolyzed milk).

Conclusion:

Hydrolysis prior to the heat treatment increases the extent of the Maillard reaction due to a higher amount of reducing sugars compared to post-hydrolyzed milk products. The difference in the furosine values of the present milk products compared to example I milk products is surprisingly low, which shows that the hydrolyzation step in the process can be placed before or after the heat treatment step without major changes in the sensory and nutritional quality of the resulting milk products.

**Example IV: Lactose-reduced and hydrolyzed milk product (hydrolyzed before HT-treatment, cold storage)**

As in example III, the lactose reduced feed for the milk product was hydrolyzed prior to the heat treatment. The lactose reduced feed was subjected to an enzyme inactivation step (indirect heating to 74 degrees C for 30 s) and was subsequently heated to a temperature of 155 degrees C for approx. 0.1 s using steam infusion.

The heat-treated feed was cooled to approx. 67 degrees C and homogenized aseptically (2 step 160/40 bar). The product was further cooled to 5 degrees C and filled aseptically in glass bottles. The product was cold (5-8 degrees C) and dark for 60 days.

This way, a lactose-reduced milk product was prepared containing 1.4 % (w/w) fat, 3.8 % (w/w) protein, < 0.01 % (w/w) lactose and approx. 3 % (w/w) carbohydrates. Dry matter content was 8.4 % (w/w).

Maillard reaction:

The progress of the Maillard reaction and the nutritional value of the milk product were monitored by measuring the furosine value of the milk product. The Furosine value was compared to carbohydrate-reduced hydrolyzed ESL milk (in Kallioinen, H., Tossavainen, O. (2009): Changes during storage of lactose hydrolyzed extended shelf life milk. DMZ, Lebensmittelindustrie und Milchwissenschaft 130 (14): 47-50).

The milk product showed a slightly lower furosine value than the ESL reference during the storage period.

Proteolytic activity:

Plasmin activity in the milk product was considerably reduced, but plasmin was not completely inactivated, but no proteolysis or bitter taste was observed during the storage period.

Denaturation of beta-lactoglobulin:

The degree of denaturation of beta-lactoglobulin was determined according to Analysis C of Example I, and the present milk product had a degree of denaturation of beta-lactoglobulin of 31.4%.

Sensory testing:

The sensory quality of the milk product was compared to a lactose-reduced ESL milk (direct steam injection at 127 degrees C for 2 s) after 7, 28 and 60 days of storage. A newly produced ESL reference was used for comparison on every sensory profiling.

The milk product showed equal sensory quality relative to the fresh reference and kept it's fresh taste during the entire storage period of 60 days.

Conclusion:

The low furosine values and the good sensory properties of the present milk product during the entire storage period show, that the present milk product has a surprisingly longer shelf-life without any decrease in quality than prior art lactose-reduced milk products.

**Example V: Lactose-reduced and hydrolyzed milk product (hydrolyzed after HT-treatment, ambient storage)**

Two milk products similar to example II were produced on a different production plant using a modified process. The lactose reduced feed contained approx. 1.8 % (w/w) fat, approx. 3.8 % (w/w) protein and approx. 2.7 % (w/w) lactose. The dry matter content of the feed was approx. 9.3 % (w/w).

The feed was subjected to an enzyme inactivation step (indirect heating to 85 degrees C for 120 s or 90 degrees C for 120 s). The feed then was cooled to 72 degrees C and was subsequently heated to a temperature of 155 degrees C for approx. 0.1 s using steam infusion. The heat-treated feed was cooled to 71 degrees C and homogenized aseptically (2 step 160/40 bar). The product was further cooled to approx. 20 degrees C and sterile filtered lactase (Maxilact LG1000) was added to a final concentration of 0.02 % (w/w).The milk products were filled aseptically in Tetra Bric packages.

The packed milk products were stored at ambient temperature. After 7 days of storage the lactose content was < 0.01 % (w/w).

This way, two lactose reduced milk products were prepared containing 1.8 % (w/w) fat, approx. 3.9 % (w/w) protein, < 0.01 % (w/w) lactose and approx. 3 % (w/w) carbohydrates. Dry matter content was 9.4 % (w/w).

Maillard reaction

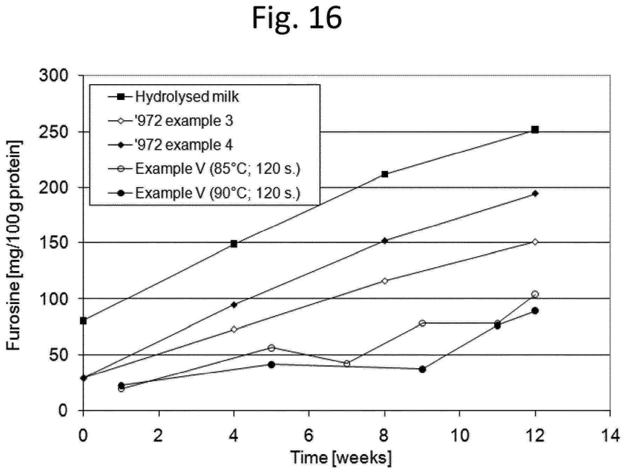

Figure 16 shows the furosine values of the present lactose reduced milk products compared to the milk products and reference milk of example 3 and 4 of WO 2009/000972 ('972). Compared to example II milk products, the milk products show a higher furosine content. This can be due to the cooling of the product after the enzyme inactivation step, which leads to an increased heat load of the product.

The milk products of example V still had clearly lower furosine values compared to the references during the observed storage period.

Proteolytic activity:

The plasmin system was effectively inactivated in Example V milk related products (< 20 $\mu$U/ml) and no proteolysis was observed during storage.

Sensory testing:

Sensory profiling of the milk products was performed after 7, 28 and 60 days of storage. The present milk products had better organoleptic properties than the UHT reference, particularly with respect to cooked flavour and milk flavour. An informal sensory test (using a 4 person panel) was performed 84 days after production and confirmed that the present milk products still had a good, consumer-acceptable taste.

Conclusion:

The surprisingly low furosine values of the present milk products demonstrate that the present lactose-reduced milk products are less prone than the lactose-reduced milk of the prior art to having sensory defects related to the Maillard reaction. The different processing plant and the cooling step prior to the heat treatment resulted in a slight rise in the furosine values of the present milk products compared to example II milk products. However, the cooling step allowed an optimum temperature for both the steam infusion heat treatment and the homogenization of the milk products. In addition to that, the sensory quality of the product was found to be better than the reference.

Besides the better furosine values, the process is simpler and more robust than the processes used in the prior art. Compared to the process described in the international patent application WO 2009/000972, the process described in example V (and in the other examples described herein) requires less energy and is not prone to cross-contamination, as the feed is not separated into a milk base and a lactose fraction and recombined after the high temperature treatment.

**Example VI: Lactose-reduced and hydrolyzed milk product (hydrolyzed before HT-treatment, cold storage)**

In addition to example IV, two milk products were produced with the same process and processing plant as described in example V.

The lactose reduced feed contained 1.8 % (w/w) fat, approx. 3.9 % (w/w) protein and approx. 2.8 % (w/w) lactose. The dry matter content of the feed was approx. 9.5 % (w/w). Prior to the heat treatment, the feed was transferred to a tank and lactase (Maxilact LG5000) was added to a final concentration of 0.07 % (w/w). Lactose hydrolysis was performed at 10 $\pm$ 1 degrees C for > 20 h to reach a lactose concentration of < 0.01 % (w/w).

The lactose reduced feed was subjected to an enzyme inactivation step (indirect heating to 74 degrees C for 45 s or 80 degrees C for 45 s). After this the feed was cooled to 72 degrees C and was subsequently heated to a temperature of 155 degrees C for approx. 0.1 s using steam infusion. The heat-treated feed was cooled to 71 degrees C and homogenized aseptically (2 step 160/40 bar). The products were further cooled to approx. 8 degrees C and filled aseptically in Tetra Bric packages. The products were stored cold (5-8 degrees C).

This way, two lactose reduced milk products were prepared containing 1.8 % (w/w) fat, approx. 4 % (w/w) protein, < 0.01 % (w/w) lactose and approx. 3 % (w/w) carbohydrates. Dry matter content was 9.5 % (w/w).

Maillard reaction:

The furosine values of the present milk products were similar to the furosine value of a freshly produced ESL reference during the observed storage period of 60 days.

Proteolytic activity:

Plasmin activity in the milk products was considerably reduced, but plasmin was not completely inactivated. No proteolysis or bitter taste was observed during the storage period.

Denaturation of beta-lactoglobulin:

The degree of denaturation of beta-lactoglobulin was determined according to Analysis C of Example I, and the present milk products had a degree of denaturation of beta-lactoglobulin of 41 and 45%, respectively.

Sensory testing:

Like the milk products of example IV, the present milk products were compared to a newly produced lactose reduced ESL reference. Sensory profiling was performed after 7, 28 and 60 days of storage. Throughout the storage period, the milk products surprisingly had sensory proprieties similar to the fresh ESL reference. An informal sensory test (using a 4 person panel) was performed 98 days after production and confirmed that the present milk products still had a good, consumer-acceptable taste.

Conclusions:

The low furosine values and the good sensory properties of the present milk product during the entire storage period show, that the present milk products have a surprisingly longer shelf-life without any decrease in quality than prior art lactose-reduced milk products.

**Claims**

**1.** A method of producing a packaged, lactose-reduced milk-related product, the method comprising the steps of:

    a) providing a lactose-reduced milk-related feed by subjecting a milk to at least one ultrafiltration (UF) step, which leads to the formation of an UF retentate and a UF permeate, and using at least the protein of UF retentate for the formation of the milk-related feed, so that milk-related feed contains at least the protein of UF retentate,
    b) subjecting a milk derivative derived from said milk-related feed to a High Temperature (HT)-treatment, wherein the milk derivative is heated to a temperature in the range of 140 - 180 degrees C, kept in that temperature range for a period of at most 200 msec., and then finally cooled,
    c) packaging a lactose-reduced milk-related product derived from the HT-treated milk derivative,

which method furthermore involves a hydrolysis step where at least some of the lactose is hydrolysed into glucose and galactose and an enzyme inactivation step whereby the combined activity of plasmin and plasminogen of the treated liquid is reduced by at least 60% relative to the activity of the untreated liquid,

wherein deriving the milk derivative from the milk-related feed involves subjecting the milk-related feed to the enzyme inactivation step and where the hydrolysis step is performed after subjecting the milk-related feed to the enzyme inactivation step,

or

wherein deriving the milk derivative from the milk-related feed involves hydrolysing at least some of the lactose of the milk-related feed and where the enzyme inactivation step is performed after the hydrolysis,

or

wherein deriving the lactose-reduced milk-related product from the HT-treated milk derivative involves subjecting the HT-treated milk derivative to the enzyme inactivation step,

and

wherein deriving the lactose-reduced milk-related product from the milk derivative involves hydrolysing at least some of the lactose of the HT-treated milk derivative,

and

wherein the hydrolysis step is performed before or after subjecting the HT-treated milk derivative to the enzyme inactivation step.

2. The method according to claim 1, wherein step a) comprises the further steps of subjecting the UF permeate to nanofiltration, and adding the permeate of the nanofiltration to the retentate of the at least one ultrafiltration.

3. The method according to any of the preceding claims, wherein the lactose-reduced milk-related feed comprises at most 3% (w/w) lactose relative to the total weight of the lactose-reduced milk-related feed.

4. The method according to any of the preceding claims, wherein the HT-temperature range of step b) is 145-170 degrees C and/or the milk derivative is kept in the HT-temperature range for a period of at most 150 msec.

5. The method according to any of the preceding claims, wherein the enzyme inactivation step comprises adjusting the temperature of the milk-related feed or the HT-treated milk derivative to a temperature in the range of 70-95 degrees C and keeping the temperature of the milk-related feed or HT-treated milk derivative in that range for a period in the range of 30-500 seconds.

6. The method according to any of the preceding claims, furthermore comprising a step of physically removing microorganisms.

7. A lactose-reduced milk related product obtainable by the method according to any of the claims 1-6 having a shelf life of at least 30 days when kept at 25 degrees C or at least 70 days when kept at 5 degrees C.

8. The lactose-reduced milk related product according to claim 7 having a content of beta-denatured lactoglobulin of at most 50% (w/w) relative to the total amount of both denatured and non-denatured beta-lactoglobulin.

9. The lactose-reduced milk related product according to claim 7 or 8 comprising at most 3% (w/w) lactose relative to the total weight of the lactose-reduced product.

10. The lactose-reduced milk related product according to any one of claims 7 to 9 having a furosine value of at most 80 mg / 100 g protein on day 49 after the production when kept at a temperature of 25 degrees C during storage.

**Patentansprüche**

1. Verfahren zur Herstellung eines verpackten, lactosereduzierten Milchprodukts, wobei das Verfahren die folgenden Schritte umfasst:

a) Bereitstellen einer lactosereduzierten Milchbeschickung durch Unterziehen einer Milch mindestens einem Ultrafiltrations- (UF-) Schritt, der zur Bildung eines UF-Retentats und eines UF-Permeats führt, und Verwenden mindestens des Proteins des UF-Retentats für die Bildung der Milchbeschickung, sodass die Milchbeschickung mindestens das Protein des UF-Retentats enthält,

b) Unterziehen eines Milchderivats, das von der Milchbeschickung stammt, einer Hochtemperatur- (HT-) Behandlung, wobei das Milchderivat auf eine Temperatur im Bereich von 140-180 Grad C erhitzt, in diesem Temperaturbereich für einen Zeitraum von höchstens 200 ms gehalten und dann schließlich abgekühlt wird,

c) Verpacken eines lactosereduzierten Milchprodukts, das von dem HT-behandelten Milchderivat stammt,

wobei das Verfahren weiter einen Hydrolyseschritt beinhaltet, bei dem mindestens ein Teil der Lactose zu Glucose und Galactose hydrolysiert wird, und einen Enzyminaktivierungsschritt, wodurch die kombinierte Aktivität von Plasmin und Plasminogen der behandelten Flüssigkeit um mindestens 60 % gegenüber der Aktivität der unbehandelten Flüssigkeit, vermindert wird,

wobei das Ableiten des Milchderivats von der Milchbeschickung beinhaltet dass die Milchbeschickung dem Enzyminaktivierungsschritt unterworfen wird und wobei der Hydrolyseschritt durchgeführt wird, nachdem die Milchbeschickung dem Enzyminaktivierungsschritt unterworfen wurde,

oder

wobei das Ableiten des Milchderivats von der Milchbeschickung das Hydrolysieren von mindestens einem Teil der Lactose der Milchbeschickung beinhaltet und wobei der Enzyminaktivierungsschritt nach der Hydrolyse durchgeführt wird,

oder

wobei das Ableiten des lactosereduzierten Milchprodukts von dem HT-behandelten Milchderivat das Unterwerfen des HT-behandelten Milchderivats dem Enzyminaktivierungsschritt beinhaltet,

und

wobei das Ableiten des lactosereduzierten Milchprodukts von dem Milchderivat das Hydrolysieren von mindestens einem Teil der Lactose des HT-behandelten Milchderivats beinhaltet,

und

wobei der Hydrolyseschritt vor oder nach dem Unterwerfen des HT-behandelten Milchderivats dem Enzyminaktivierungsschritt durchgeführt wird.

2. Verfahren nach Anspruch 1, wobei Schritt a) die weiteren Schritte des Unterwerfens des UF-Permeats einer Nanofiltration und des Zugebens des Permeats der Nanofiltration zum Retentat der mindestens einen Ultrafiltration umfasst.

3. Verfahren nach einem der vorstehenden Ansprüche, wobei die lactosereduzierte Milchbeschickung höchstens 3% (w/w) Lactose, bezogen auf das Gesamtgewicht der lactosereduzierten Milchbeschickung, umfasst.

4. Verfahren nach einem der vorstehenden Ansprüche, wobei der HT-Temperaturbereich aus Schritt b) 145-170 Grad C beträgt und/oder das Milchderivat über einen Zeitraum von höchstens 150 ms in dem HT-Temperaturbereich gehalten wird.

5. Verfahren nach einem der vorstehenden Ansprüche, wobei der Enzyminaktivierungsschritt das Einstellen der Temperatur der Milchbeschickung oder des HT-behandelten Milchderivats auf eine Temperatur im Bereich von 70-95 Grad C und das Halten der Temperatur der Milchbeschickung oder des HT-behandelten Milchderivats über einen Zeitraum im Bereich von 30-500 Sekunden in diesem Bereich umfasst.

6. Verfahren nach einem der vorstehenden Ansprüche, das weiter einen Schritt des physikalischen Entfernens von Mikroorganismen umfasst.

7. Lactosereduziertes Milchprodukt, das über das Verfahren nach einem der Ansprüche 1-6 erhalten werden kann, mit einer Haltbarkeit von mindestens 30 Tagen, wenn es bei 25 Grad C gehalten wird, oder von mindestens 70 Tagen, wenn es bei 5 Grad C gehalten wird.

8. Lactosereduziertes Milchprodukt nach Anspruch 7, das einen Gehalt an betadenaturiertem Lactoglobulin von höchstens 50 % (w/w), bezogen auf die Gesamtmenge an sowohl denaturiertem als auch nicht-denaturiertem Beta-Lactoglobulin, aufweist.

9. Lactosereduziertes Milchprodukt nach Anspruch 7 oder 8, das höchstens 3% (w/w) Lactose, bezogen auf das Gesamtgewicht des lactosereduzierten Produkts, umfasst.

**10.** Lactosereduziertes Milchprodukt nach einem der Ansprüche 7 bis 9, das am Tag 49 nach der Herstellung einen Furosinwert von höchstens 80 mg/100 g Protein aufweist, wenn es während der Lagerung bei einer Temperatur von 25 Grad C gehalten wird.

**Revendications**

**1.** Procédé de production d'un produit à base de lait à faible teneur en lactose conditionné, le procédé comprenant les étapes consistant à :

a) fournir un aliment à base de lait à faible teneur en lactose en soumettant un lait à au moins une étape d'ultrafiltration (UF) qui conduit à la formation d'un rétentat d'UF et d'un perméat d'UF, et en utilisant au moins la protéine du rétentat d'UF pour la formation de l'aliment à base de lait, de sorte que l'aliment à base de lait contienne au moins la protéine du rétentat d'UF,
b) soumettre un dérivé du lait dérivé dudit aliment à base de lait à un traitement à haute température (HT), dans lequel le dérivé du lait est chauffé à une température dans la plage de 140 et 180 degrés °C, maintenu dans cette plage de température pendant une période d'au plus 200 msec, puis finalement refroidi,
c) conditionner un produit à base de lait à faible teneur en lactose dérivé du dérivé de lait traité par HT,

lequel procédé implique en outre une étape d'hydrolyse au cours de laquelle une partie au moins du lactose est hydrolysée en glucose et en galactose, ainsi qu'une étape d'inactivation enzymatique au cours de laquelle l'activité combinée de la plasmine et du plasminogène du liquide traité est réduite d'au moins 60 % par rapport à l'activité du liquide non traité,

dans lequel la dérivation du dérivé de lait à partir de l'aliment à base de lait implique de soumettre l'aliment à base de lait à l'étape d'inactivation enzymatique et dans lequel l'étape d'hydrolyse est réalisée après avoir soumis l'aliment à base de lait à l'étape d'inactivation enzymatique,
ou
dans lequel la dérivation du dérivé de lait à partir de l'aliment à base de lait implique l'hydrolyse d'au moins une partie du lactose de l'aliment à base de lait et où l'étape d'inactivation enzymatique est réalisée après l'hydrolyse,
ou
dans lequel la dérivation du produit à base de lait à faible teneur en lactose à partir du dérivé de lait traité par HT consiste à soumettre le dérivé de lait traité par HT à l'étape d'inactivation enzymatique,
et
dans lequel la dérivation du produit à base de lait à faible teneur en lactose à partir du dérivé de lait traité par HT implique l'hydrolyse d'au moins une partie du lactose du dérivé du lait traité par HT,
et
dans lequel l'étape d'hydrolyse est effectuée avant ou après avoir soumis le dérivé du lait traité par HT à l'étape d'inactivation enzymatique.

**2.** Procédé selon la revendication 1, dans lequel l'étape a) comprend les étapes supplémentaires consistant à soumettre le perméat d'UF à une nanofiltration et à ajouter le perméat de la nanofiltration au rétentat de l'au moins une ultrafiltration.

**3.** Procédé selon l'une quelconque des revendications précédentes, dans lequel l'aliment à base de lait à faible teneur en lactose comprend au maximum 3 % (p/p) de lactose par rapport au poids total de l'aliment à base de lait à faible teneur en lactose.

**4.** Procédé selon l'une quelconque des revendications précédentes, dans lequel la plage de température HT de l'étape b) est comprise entre 145 et 170 degrés °C et/ou le dérivé du lait est maintenu dans la plage de température HT pendant une période d'au plus 150 msec.

**5.** Procédé selon l'une quelconque des revendications précédentes, dans lequel l'étape d'inactivation enzymatique consiste à ajuster la température de l'aliment à base de lait ou du dérivé du lait traité par HT à une température comprise entre 70 et 95 degrés °C et à maintenir la température de l'aliment à base de lait ou du dérivé du lait traité par HT dans cette plage pendant une période comprise entre 30 et 500 secondes.

**6.** Procédé selon l'une quelconque des revendications précédentes, comprenant en outre une étape d'élimination physique des micro-organismes.

7. Produit à base de lait à faible teneur en lactose pouvant être obtenu par le procédé selon l'une quelconque des revendications 1-6, présentant une durée de conservation d'au moins 30 jours à 25 degrés °C ou d'au moins 70 jours à 5 degrés °C.

8. Produit à base de lait à faible teneur en lactose selon la revendication 7, présentant une teneur en lactoglobuline bêta-dénaturée d'au plus 50 % (p/p) par rapport à la quantité totale de bêta-lactoglobuline dénaturée et non dénaturée.

9. Produit à base de lait à faible teneur en lactose selon la revendication 7 ou 8 comprenant au plus 3 % (p/p) de dérivé de lactose par rapport au poids total du produit à faible teneur en lactose.

10. Produit à base de lait à faible teneur en lactose selon l'une quelconque des revendications 7 à 9 présentant une valeur de furosine d'au plus 80 mg/100 g de protéines le 49e jour après la production, lorsqu'ils sont conservés à une température de 25 degrés °C pendant l'entreposage.

# Fig. 1

```
┌─────────────────┐
│      Feed       │
└─────────────────┘
         │
         ▼
┌─────────────────┐
│   HT treatment  │
└─────────────────┘
         │
         ▼
┌─────────────────┐
│    Packaging    │
└─────────────────┘
```

# Fig. 2

```
┌─────────────────┐
│      Feed       │
└─────────────────┘
         │
         ▼
   ┌───────────┐
   │ Hydrolysis │
   └───────────┘
         │
         ▼
┌─────────────────┐
│   HT treatment  │
└─────────────────┘
         │
         ▼
┌─────────────────┐
│    Packaging    │
└─────────────────┘
```

# Fig. 3

```
┌─────────────────┐
│      Feed       │
└─────────────────┘
         │
         ▼
┌─────────────────┐
│   HT treatment  │
└─────────────────┘
         │
         ▼
   ┌───────────┐
   │ Hydrolysis │
   └───────────┘
         │
         ▼
┌─────────────────┐
│    Packaging    │
└─────────────────┘
```

# Fig. 4

```
┌──────────────┐
│     Feed     │
└──────┬───────┘
       │
       ▼
┌──────────────┐
│    Enzyme    │
│ inactivation │
└──────┬───────┘
       │
       ▼
┌──────────────┐
│              │
│ HT treatment │
│              │
└──────┬───────┘
       │
       │
       ▼
┌──────────────┐
│              │
│  Packaging   │
│              │
└──────────────┘
```

# Fig. 5

```
┌──────────────┐
│     Feed     │
└──────┬───────┘
       │
       ▼
┌──────────────┐
│  Hydrolysis  │
└──────┬───────┘
       │
       ▼
┌──────────────┐
│    Enzyme    │
│ inactivation │
└──────┬───────┘
       │
       ▼
┌──────────────┐
│              │
│ HT treatment │
│              │
└──────┬───────┘
       │
       │
       ▼
┌──────────────┐
│              │
│  Packaging   │
│              │
└──────────────┘
```

# Fig. 6

```
┌─────────────────┐
│      Feed       │
└────────┬────────┘
         ▼
┌─────────────────┐
│     Enzyme      │
│   inactivation  │
└────────┬────────┘
         ▼
┌─────────────────┐
│    Hydrolysis   │
└────────┬────────┘
         ▼
┌─────────────────┐
│                 │
│   HT treatment  │
│                 │
└────────┬────────┘
         │
         ▼
┌─────────────────┐
│                 │
│    Packaging    │
│                 │
└─────────────────┘
```

# Fig. 7

```
┌─────────────────┐
│      Feed       │
└────────┬────────┘
         ▼
┌─────────────────┐
│     Enzyme      │
│   inactivation  │
└────────┬────────┘
         │
         ▼
┌─────────────────┐
│                 │
│   HT treatment  │
│                 │
└────────┬────────┘
         │
         ▼
┌─────────────────┐
│    Hydrolysis   │
└────────┬────────┘
         ▼
┌─────────────────┐
│                 │
│    Packaging    │
│                 │
└─────────────────┘
```

# Fig. 8

```
┌─────────────┐
│    Feed     │
└─────────────┘
       │
       ▼
┌─────────────┐
│ HT treatment│
└─────────────┘
       │
       ▼
┌─────────────┐
│   Enzyme    │
│ inactivation│
└─────────────┘
       │
       ▼
┌─────────────┐
│  Packaging  │
└─────────────┘
```

# Fig. 9

```
┌─────────────┐
│    Feed     │
└─────────────┘
       │
       ▼
┌─────────────┐
│  Hydrolysis │
└─────────────┘
       │
       ▼
┌─────────────┐
│ HT treatment│
└─────────────┘
       │
       ▼
┌─────────────┐
│   Enzyme    │
│ inactivation│
└─────────────┘
       │
       ▼
┌─────────────┐
│  Packaging  │
└─────────────┘
```

## Fig. 10

Feed

HT treatment

Hydrolysis

Enzyme inactivation

Packaging

## Fig. 11

Feed

HT treatment

Enzyme inactivation

Hydrolysis

Packaging

# Fig. 12

# Fig. 13

# Fig. 14

# Fig. 15

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009000972 A
- US 2005214409 A
- WO 2009043356 A
- WO 2006123047 A1
- WO 9807328 A

### Non-patent literature cited in the description

- **HARRI KALLIOINEN et al.** Changes during storage of lactose hydrolysed extended shelf life (ESL) milk. *Milchwissenschaft*, 2008, vol. 63 (4), 381-385
- **OLLI TOSSAVAINEN et al.** Effect of lactose hydrolysis on furosine and available lysine in UHT skim milk. *Milchwissenschaft*, 2008, vol. 63 (1), 22-26
- *Thermal technologies in food processing*, ISBN 185573558 X
- **KLAUS BUCHHOLZ et al.** Biocatalysts and Enzyme technology. Wiley VCH Verlag GmbH, 2005
- Tetra Pak Dairy processing Handbook. 2003
- Standard methods for the examination of dairy products. Am. Publ. Health Assoc., 1978
- **KAI-PING et al.** *J. Agric. Food Chem.*, 1996, vol. 44, 1058-1063
- Grade ''A'' Pasteurized Milk Ordinance.. U.S. Dept. of Health and Human Services, Public Health Service, 2001
- **GILLIS et al.** *J Dairy Sci.*, 1985, 2875-9
- *Plate count test at 30 degrees C. National Standard Method D2*, 2004 (3), www.hpa-standardmethods. org.uk/pdf sops.asp
- **P. A. VAZQUEZ-LANDAVERDE et al.** *J. Dairy Sci.*, 2005, vol. 88, 3764-3772
- **SINGH et al.** *Lait*, 1989, vol. 69 (2), 131-136
- **KULMYRZAEV et al.** *Lait*, 2002, vol. 82, 725-735
- **STONE, H** ; **SIDEL, J.L**. Sensory Evaluation Practices. Tragon Corporation, 2004
- **PIERZCHALA P.A.** A new fluorogenic substrate for plasmin. *Biochem. J.*, 1979, vol. 183, 555-559
- **SAINT-DENIS T.** ; **HUMBERT G.** ; **GAILLARD J.L.** Enzymatic assays for native plasmin, plasminogen and plasminogen activators in bovine milk. *J. Dairy Res.*, 2001, vol. 68, 437-449
- **KORYCKA-DAHL M.** ; **RIBADEAU-DUMAS B.** ; **CHENE N.** ; **MARTAL J.** Plasmin activity in milk. *J. Dairy Sci.*, 1983, vol. 66, 704-711
- **RICHARDSON B.C.** ; **PEARCE K.N.** The determination of plasmin in dairy products. *N. Z. J. Dairy Sci. Technol.*, 1981, vol. 16, 209-220
- **ROLLEMAH.S.** ; **VISSER S.** ; **POLL J.K.** Spectrophotometric assay of plasmin and plasminogen in bovine milk. *Milchwissenschaft*, 1983, vol. 38, 214-217
- **KALLIOINEN, H.** ; **TOSSAVAINEN, O.** Changes during storage of lactose hydrolyzed extended shelf life milk. *DMZ, Lebensmittelindustrie und Milchwissenschaft*, 2009, vol. 130 (14), 47-50